# EUROPÄISCHE PATENTSCHRIFT

(11) **EP 1 421 361 B1**
(45) Veröffentlichungstag und Bekanntmachung des Hinweises auf die Patenterteilung: **25.08.2010**
(21) Anmeldenummer: 02759870.5
(22) Anmeldetag: 29.08.2002
(51) Int. Cl.: G01N 1/40, C12N 15/10, C12M 1/24, C12M 1/40

(54) **VERFAHREN UND VORRICHTUNG ZUR VORBEREITUNG EINER BIOLOGISCHEN URPROBE FÜR DIE BESTIMMUNG ZUMINDEST EINER DARIN ENTHALTENEN KOMPONENTE**
METHOD AND DEVICE FOR PREPARING A SAMPLE OF BIOLOGICAL ORIGIN IN ORDER TO DETERMINE AT LEAST ONE CONSTITUENT CONTAINED THEREIN
PROCEDE ET DISPOSITIF DE PREPARATION D'UN PRELEVEMENT D'ORIGINE BIOLOGIQUE POUR DETERMINER AU MOINS UN CONSTITUANTS

(30) Priorität: 29.08.2001 AT 13642001
(43) Veröffentlichungstag der Anmeldung: 26.05.2004
(73) Patentinhaber: Dahm, Michael W., Dr. Dr., 81677 München (DE)
(72) Erfinder: DAHM, Michael, W., 81677 München (DE); PHELPS, Robert, C., 85757 Karlsfeld (DE)
(74) Vertreter: Secklehner, Günter
(86) Internationale Anmeldenummer: PCT/AT2002/000255
(87) Internationale Veröffentlichungsnummer: WO 2003/019131

(56) Entgegenhaltungen:
- EP-A- 0 012 976
- EP-A- 0 409 056
- EP-A- 0 592 689
- EP-A- 0 614 653
- EP-A- 0 818 542
- WO-A-00/09746
- WO-A-97/05248
- WO-A-98/32877
- DE-A- 3 817 101
- DE-A1- 3 342 261
- DE-C1- 4 301 033
- DE-U1- 29 615 162
- FR-A- 1 380 706
- FR-A- 2 788 431
- US-A- 2 954 769
- US-A- 3 207 374
- US-A- 3 712 295
- US-A- 4 475 914
- US-A- 5 251 474
- US-A- 5 396 898
- US-A- 5 533 683
- US-A- 5 653 686
- US-A- 5 743 312
- US-A- 5 829 696
- US-A- 5 833 860
- CHOMCZYNSKI P ET AL: "SINGLE-STEP METHOD OF RNA ISOLATION BY ACID GUANIDINIUM THIOCYANATE-PHENOL-CHLOROFORM EXTRACTION" ANALYTICAL BIOCHEMISTRY, ORLANDO, FL, US, Bd. 162, Nr. 1, 1. April 1987 (1987-04-01), Seiten 156-159, XP000608462 ISSN: 0003-2697

## Beschreibung

Die Erfindung betrifft ein Verfahren zur Vorbereitung einer Urprobe biologischen Ursprungs für die Bestimmung zumindest einer darin enthaltenen Komponente entsprechend den Merkmalen im Oberbegriff des Anspruchs 1.

Die molekulare Analytik, d.h. der Nachweis von Nukleinsäuren nimmt einen immer größer werdenden Stellenwert in der klinischen Diagnostik ein, z.B. zur Bestimmung von genetischen Defekten oder aber zur Aufklärung von Verbrechen, um nur einige Beispiele zu nennen. Methode der Wahl zum Nachweis von DNA ist dabei derzeit die Polymerase Kettenreaktion (PCR) bzw. die Reverse Transkriptase Polymerase Kettenreaktion (RT-PCR), nachdem mit diesen selbst geringste Mengen von spezifischen Nukleinsäuren nachgewiesen werden können.

Aus der WO 00/09746 A ist ein Gefäß zur Entnahme von Blut mit gleichzeitiger Nucleinsäurestabilisierung bekannt. Die Wirkung der zellulären und extrazellulären Nucleasen ist normalerweise unter physiologischer Kontrolle, solange die Zellen in ihrer normalen Körperumgebung sind. Die Entnahme von Blut führt jedoch zu mehr oder weniger starken Veränderungen der in den Zellen enthaltenen Nucleinsäuren. Die Zellen enthalten Nucleasenenzyme, die die Nucleinsäuren zerstören. Zur Vermeidung dieses Abbaues enthält das aus dieser WO 00/09746 A bekannte Gefäß eine wäßrige Lösung eines Guanidiniumsalzes mit einer Puffersubstanz, einem Reduktionsmittel und/oder einem Detergenz, so daß im Moment der Blutabnahme das Blut lysiert wird und die Nucleasen freigesetzt werden. Das stabilisierte Blut kann danach mit den gängigen Analysekits für Nukleinsäuren analysiert werden kann. Nachteilig ist dabei, daß, obwohl das Blutabnahmeröhrchen evakuiert ist, nicht mit hundertprozentiger Sicherheit ausgeschlossen werden kann, daß ein Rückfluß dieser Mischung in den Blutkreislauf des Patienten stattfindet und in der Folge eine Lyse, d.h. Zerstörung von Zellen im lebenden Körper eintritt Andererseits ist aus dem Stand der Technik auch bekannt, die Lyse in einem separaten Gefäß durchzuführen, wozu das Blut in dieses überführt werden muß. Dies erfolgt bis dato durch Öffnen des Blutabnahmeröhrchens und Entleeren des Inhaltes in das Gefäß, wodurch eine potentielle Gefahr für das medizinische Personal durch Viren, z.B. HIV, HCV gegeben ist.

In den letzten Jahren ist das Interesse an sogenannten Prognosemodellen zum Nachweis und zur Überwachung von minimalen Resterkrankungen angewachsen, z.B. zur Klassifizierung eines Tumorstadiums durch quantitativen Nachweis von im Blut zirkulierenden Tumorzellen. Ein derartiges System ist z.B. unter der Bezeichnung "OncoQuick®" erhältlich. Dabei werden während einer Zentrifugation die sich im Blut befindlichen Zellen entsprechend ihrer spezifischen Dichte getrennt. Aufgrund der besonderen Eigenschaften eines Separationsmediums sowie wegen der Anordnung einer Trennscheibe im Zentrifugenröhrchen werden Blutzellen wie Erythrozyten und Leukozyten in das untere Kompartiment des Röhrchens sedimentiert und verdrängen dabei das Trennmedium in das obere Kompartiment. Die Zellfraktion mit der geringeren Dichte, die auch die Tumorzellen enthält, wird in der Interphase im oberen Kompartiment zwischen Plasma und Trennmedium angereichert und kann von dort entnommen werden. Nach einer weiteren Aufbereitung können die Tumorzellen für bekannte Nachweisverfahren verwendet werden.

Es sind also aus dem Stand der Technik bislang unterschiedlichste Ansätze und Hilfsmittel zur molekularen Diagnostik bekannt. Nachteilig ist daran, daß die Einzelsysteme nicht oder nur mit einem mehr oder weniger großen Aufwand miteinander kombiniert werden können, so daß es letztendlich dem Endverbraucher überlassen bleibt, sich diverser Hilfsmittel zu bedienen. Ein geschlossenes und sicheres System zumindest für jenen Teil der Analyse, bei dem Infektionsgefahr durch kontaminiertes Probenmaterial gegeben ist, ist damit nicht möglich.

Zur Verbindung von zwei Behältern, um zwischen diesen Flüssigkeitsmengen auszutauschen, sind aus dem Stand der Technik unterschiedlichste Ansätze für Verbindungsvorrichtungen bekannt. So ist z.B. aus der DE 38 17 101 A1 eine Vorrichtung zum Überleiten einer Flüssigkeit aus einem Behälter in einen zweiten, eine zu lösende Substanz enthaltenden Behälter bekannt. Diese Vorrichtung besteht aus einem Hohlkörper mit zwei einander gegenüberliegend angeordneten Öffnungen zur Aufnahme der Behälterstutzen. Zwischen diesen Öffnungen ist eine Kanüle derart angeordnet, daß diese in ihrer Längsrichtung gegen einen überfahrbaren Anschlag verschiebbar gelagert ist, dessen Überfahrwiderstand größer ist als der Durchdringwiderstand des Verschlußstopfens des in Verschieberichtung der Kanüle einsteckbaren ersten Behälters, wobei die Kanüle nach Überfahren des Überfahrwiderstandes den Verschlussstopfen des in den Hohlkörper eingesteckten zweiten Behälters durchsticht. Damit soll eine definierte Reihenfolge für das Durchstechen der Verschlußstopfen ermöglicht werden.

Die US 5,653,686 A beschreibt eine zylinderförmige Vorrichtung für die Überleitung von Blut von einem ersten, dieses enthaltenden Blutprobenröhrchen in ein zweites Röhrchen. Die Vorrichtung weist zwei Aufnahmebereiche für verschlossene Blutprobenröhrchen auf, zwischen denen eine Kanüle für den Bluttransfer und eine Belüftungsnadel angeordnet ist. Die Belüftungsnadel mündet in eine Belüftungskammer in der Vorrichtung, um eine Gefährdung des Verwenders derselben durch infektiöses Blut über Aerosolbildung während des Druckausgleiches beim Aufschieben des ersten Röhrchens zu vermeiden. Erst nach erfolgtem Druckausgleich wird der Verschlußstopfen des ersten Röhrchens von der Kanüle penetriert. Da das zweite Röhrchen evakuiert ist, kann dieses erst danach in den zweiten Aufnahmebereich der Vorrichtung eingesetzt und damit die Strömungsverbindung zwischen den Röhrchen hergestellt werden. Aus dieser US-A ist weiters bekannt, ein bestimmtes Blutvolumen für eine Antikörper-Nachweisreaktion aus dem Blutprobenröhrchen dem zweiten, evakuierten Röhrchen zuzuführen. Das Vakuum ist dabei so bemessen, daß ein an eine im Röhrchen vorgelegte Menge eines monoklonalen Antikörpers angepaßtes Blutvolumen überführt wird.

Aus der DE 195 13 666 C1 ist eine Vorrichtung zum Zusammenführen einer ersten, flüssigen und einer zweiten, festen oder flüssigen Komponente mittels Unterdruck unter sterilen Bedingungen bekannt. Die Überführung der ersten flüssigen Komponente aus einem Behältnis in ein weiteres, unter Unterdruck stehendes Behältnis erfolgt dabei mit Hilfe eines Zweischrittmechanismus, bei dem zunächst der Verschluß des die flüssige Komponente aufweisenden ersten Behältnisses mittels einer Kanüle der Vorrichtung durchstochen wird und dann ein die Kanüle aufnehmender Kanülenträger mittels diesem Behältnis in Richtung des die feste oder flüssige Komponente aufnehmenden Behältnisses verschoben und hierdurch der Verschluß mittels der Kanüle durchstochen wird. Der die Kanüle aufnehmende Kanülenträger ist als plattenförmiger, senkrecht zur Längsrichtung des die beiden Behältnisse aufnehmenden Hohlkörpers orientierter Körper ausgebildet, der über Haltestege mit der Innenwandung des Hohlkörpers verbunden ist, wobei die Haltestege durch Aufbringen einer manuellen Kraft zerreißbar sind, die größer ist als die Durchdringkraft der Kanüle beim Durchstechen des Verschlußstopfens des zuerst geöffneten Behältnisses.

Aus der EP 0 592 689 A1 ist ebenfalls eine Vorrichtung zur Transferierung einer Flüssigkeit zwischen zwei Behältern, wovon einer ein Medikament enthält, welches mit der Flüssigkeit vermischt werden soll, bekannt, die zylinderförmig ausgebildet ist und in welcher eine entlang der Zylinderachse verschiebbar gehalterte Kanüle angeordnet ist. Durch das Einschieben des Behälters mit dem Medikament in Richtung auf den zweiten Behälter wird die Kanüle in gleicher Richtung verschoben und werden dabei die beiden Behälterverschlüsse penetriert. Bei dieser Vorrichtung bilden der das Medikament enthaltende Behälter und die Flüssigkeitstransfervorrichtung eine Einheit, die gegebenenfalls von dem als Infusionsbeutel ausgebildeten ersten Behälter abgezogen werden kann. Die mehrmalige Verwendung dieser Vorrichtung ist nicht vorgesehen.

Gemeinsamer Nenner dieser Vorrichtungen zur Überführung von Flüssigkeiten bzw. der damit gebildeten Systeme ist, daß das Hauptaugenmerk auf den Zeitpunkt des Penetrierens der einzelnen Behälterverschlüsse gerichtet ist, insbesondere auf eine bestimmte Reihenfolge der Penetration dieser Verschlüsse.

Wenn Zellen als Einzelzellsuspension vorliegen, wie z.B. in Zellkultur, Blut und anderen Körperflüssigkeiten, können diese direkt auf chemischen Wege lysiert werden. Gewebe hingegen bestehen aus Zellverbänden mit unterschiedlicher bindegeweblicher Einbindung und müssen zur Weiterverarbeitung zuerst mechanisch homogenisiert werden. Die Homogenisierung erfolgt standardgemäß durch zwei Methoden: 1. Das Zermörsern gefrorenen Gewebes in flüssigen Stickstoff und der Überführung des gewonnenen Pulvers in geeignete Puffersysteme oder 2. die Zerkleinerung der Gewebestücke im speziellen Puffersystem in einem Mixer. Das Puffersystem übernimmt neben der chemischen Lyse der Zellen auch die Konservierung der enthaltenen Zielsubstanzen, d.h. Proteine und Nukleinsäuren, welche im gekühlten bzw. gefrorenen Zustand dann über lange bzw. sehr lange Zeiträume gelagert oder sofort ausgearbeitet werden können.

Nachdem die Polymerase Kettenreaktion (PCR) selbst geringste Spuren von spezifischen Nukleinsäuren auf Zellebene nachzuweisen vermag, wird diese molekularbiologische Technik in immer breiterem Rahmen zu den unterschiedlichsten medizinischen Fragestellungen eingesetzt: Zielsubstrat der Wahl ist das periphere Blut. Die molekulare Gewebediagnostik wird zur Zeit nur experimentell durchgeführt. Beispiele hierfür sind der Nachweis von Mikroorganismen, wie Mykrobakterien oder Borelien in Hautläsionen oder der molekulare Tumor bzw. Metastasenachweis in Lymphknoten oder Geweben durch die gewebe- bzw. tumorspezifischen Genexpressionen von Tumorzellen zur unterstützenden Beurteilung histolohisch getroffener Aussagen. Dies kann z.B. durch den Nachweis des Tyrosinasegens beim mallgnen Melanom oder Prostata-spezifischen Antigens beim Prostata-Ca erfolgen. Als Beispiel werden in der klinischen Praxis bei Tumorpatienten Lymphknoten der dem Tumorgewebe nächst- oder nahe liegenden Lymphknotenstationen entnommen und in einer Serie von histologischen Schnitten mikroskopisch auf Absiedelungen untersucht. Nachdem nur einige Schnitte pro Gewebe untersucht werden können, ist das mikroskopische Fehlen von Metastasen kein absolut sicherer Beweis gegen das Vorkommen von Mikrofiliaeim untersuchten Gesamtgewebe. Die Teilung des Lymphknotengewebes zur einerseits histologischen und andererseits molekularbiologischen Untersuchung wird dem Kliniker bei bestimmten Krebserkrankungen sichere prognostische Aussagen oder über die Ausdehnung der Erkrankung ermöglichen und helfen, Entscheidungshilfen bei therapeutischen Maßnahmen zu geben.

Daß die klinisch-molekulare Gewebediagnostik im Allgemeinen nur im experimentellen Rahmen betrieben wird, liegt u.a. an dem relativ großen Aufwand, der zur Sicherung der molekularen Güte des Gewebes betrieben werden muß. Ist das zu untersuchende Gewebe aus dem Operationssitus entnommen worden, muß es möglichst rasch in flüssigen Stickstoff schockgefroren, in ein vorgekühltes Behältnis eingebracht und sofort bei -20 °C oder wie bisher bei -70 °C tiefgefroren werden. Dies setzt jedoch in Kliniken wie in Praxen gute Organisation im Operationssaal selbst und entsprechende Infrastruktur wie flüssigen Stickstoff in speziellen Containern, ausreichenden Kühlraum, zusätzliche Zeit, zusätzliche Arbeitskraft, spezielle Räumlichkeiten und aufgrund der Toxität der herkömmlichen Homogenisierungspuffer bzw. der potentiellen Infektiösität der Proben zusätzlichen Arbeitsschutz voraus. In vielen Kliniken, selbst in Universitätskliniken sind nicht immer alle Vorbedingungen erfüllt oder erfüllbar. Damit ist die tatsächliche Durchführung einer molekularen Gewebediagnostik in den meisten Fällen, trotz der Vorteile, nur das Produkt der Initiative von Einzelnen. Gleichermaßen schwierig gestalten sich Gewebeentnahmen und deren Konservierung in Gebieten wie z.B. in Entwicklungsländern mit schwacher molekularbiologischer Infrastruktur.

In der WO 98/32877 A1 wird eine Vorrichtung und ein Verfahren zur Isolierung von Nukleinsäuren aus einer Probe beschrieben. Dazu wird Vollblut in ein erstes Gefäß einpipettiert. In einem ersten Schritt sollen die Zellen lysiert und aufgeschlossen werden. Hierzu werden der Probenflüssigkeit die erforderlichen Reagenzien, z.B. ein chaotropes Salz und/oder Protease, zugesetzt. Das erste Gefäß wird bevorzugt mit einem Deckel fest verschlossen und gemischt. Danach wird der Deckel entfernt und ein Verschlusselement aufgeschraubt. Entweder ist das zweite Gefäß bereits am Verschlusselement befestigt oder es wird anschließend auf das Verschlusselement auf der, der Öffnung des ersten Gefäßes abgewandten Seite des nukleinsäurebindenden Materials befestigt. Anschließend wird die Probenflüssigkeit zum Durchtritt durch das nukleinsäurebindende Material veranlasst. Während die Probenflüssigkeit durch das nukleinsäurebindende Material durchtritt, werden die in der Probe vorhanden, nun zugänglichen Nukleinsäuren an das nukleinsäurebindende Material gebunden, während andere Probenbestandteile zusammen mit der Flüssigkeit in ein zweites Gefäß übertreten. Die isolierten Nukleinsäuren befinden sich nun im Verschlusselement, an das flüssigkeitsdurchlässige Material gebunden. Sie können nun auf beliebige Art weiter bearbeitet werden.

Die US 5,743,312 A beschreibt eine Vorrichtung, die dem Überleiten einer in einem Behältnis befindlichen flüssigen Komponente in ein unter Unterdruck stehendes weiteres Behältnis dient, welches sowohl eine feste als auch eine flüssige Komponente aufnimmt. Die Apparatur umfasst einen zylindrischen hohlen Körper zur Aufnahme von Öffnungen der Behälter und zumindest einer Nadel zur Penetration der beiden Verschlüsse der Behälter. Die Kanüle wird in einem Kanülenhalter beweglich gelagert. Mit Hilfe eines Zweischrittmechanismus wird eine gesicherte, gerichtete Überleitung erreicht, in dem zunächst der Verschluss des die flüssige Komponente aufweisenden Behältnisses mittels einer Kanüle durchstochen wird und dann ein, die Kanüle aufnehmender Kanülenträger mittels diesem Behältnis in Richtung des, die feste oder flüssige Komponente aufnehmenden weiteren Behältnisses verschoben wird und dadurch deren Verschluss mittels der Kanüle durchstochen wird. Der die Kanüle aufnehmende Kanülenträger ist als plattenförmiger, senkrecht zur Längsrichtung des die beiden Behältnisse aufnehmenden Hohlkörpers ausgebildet, der über Haltestege mit der Innenwand des Hohlkörpers verbunden ist, wobei die Haltestege durch Anbringen einer manuellen Kraft brechbar sind, die größer ist, als die Durchdringkraft der Kanüle beim Durchstechen des Verschlussstopfens des zunächst geöffneten Behältnisses.

Aus der US 5,833,860 A ist eine Zentrifugationsmethode und Vorrichtung zur Konzentrierung von Biomolekülen aus Lösungen mittels einer Membran, um eine maximale Menge des konzentrierten Retentats zu gewinnen, bekannt. Des Weiteren ist eine Methode zum Verschließen solcher Membranen in solchen Vorrichtungen bekannt.

Diese Aufgabe der Erfindung wird durch die Merkmale im Kennzeichenteil des Anspruches 1. Von Vorteil ist dabei, daß der Anwender des Verfahrens bei ordnungsgemäßer Durchführung mit der Urprobe biologischen Ursprungs ab dem Zeitpunkt der Probenname solange nicht mehr in Berührung kommen kann, bis die Urprobe bzw. ein Teil dieser Urprobe oder aber auch eine daraus zu bestimmende Komponente durch Reaktion mit einem Reagens bzw. Reagenzgemischen bei Raumtemperatur stabil vorliegt, beispielsweise Nukleinsäuren durch RNAsen nicht mehr abgebaut werden. Die in der Aufbereitung von Nukleinsäuren verwendeten Reagenzien, wie z.B. Lysepuffer, welche ein Guanidiniumsalz umfassen, können nach dem Verfahren nunmehr in einem separaten Behälter aufbewahrt werden, so daß unter normalen Umständen ein Kontakt mit dem Patienten während der Blutabnahme nicht mehr möglich ist. Dies insbesondere deswegen, da derartig vorbereitete Behälter, beispielsweise in Form eines Kits zur Analyse von Blutproben, nicht durch den behandelnden Arzt, sondern in die Analyse der Blutproben durchführenden Labors verwendet werden. Durch diese Aufsplittung von Probenname und Probenaufarbeitung ist es anderseits vorteilhafterweise möglich, z.B. zum Unterschied zu dem System nach der WO 00/09746 A, Proben in ihrem Urzustand "einzufrieren", so daß also nur ein Teil dieser Proben für die Analyse verwendet wird, und unverfälschte Rückstellmuster zur späteren Nachkontrolle zur Verfügung stehen. Durch den Transfer der Probe bzw. Bestandteile der Probe von einem Behälter in einen weiteren Behälter über ein geschlossenes, luftdichtes System ist aber nicht nur der direkte Kontakt von Personen mit der Probe bzw. in weiterer Folge auch mit Reagenzien zur Aufbereitung der Probe verhinderbar, sondern ist damit auch weitestgehend eine Verunreinigung, wie sie z.B. auftreten kann, wenn die Probe mit Hilfe von Pipetten zwischen einzelnen Gefäßen transferiert wird, zu verhindern. Damit kann in weiterer Folge auch die Qualität des Analyseergebnisses positiv beeinflußt werden, insbesondere die Sicherheit des Resultats. Durch die Herstellung eines geschlossenen, luftdichten Systems zwischen den beiden Behältern ist es weiters möglich, die Bearbeitung der Urprobe jederzeit zu unterbrechen, ohne daß die Gefahr einer oxidativen Beanspruchung der Probe durch Luftsauerstoff besteht. Dies ist insbesondere dann der Fall, wenn beide Behälter vor deren Verwendung evakuiert waren.

Zum besseren Verständnis der Erfindung wird diese anhand der nachfolgenden schematisierten Darstellungen näher erläutert.

Es zeigen, in schematisch vereinfachter Darstellung:
- Fig. 1 a.) - j.): eine Ausführungsvariante eines erfindungsgemäßen Verfahrensablaufes für die Abtrennung von zumindest einer Nukleinsäure aus Blut;
- Fig. 2: einen Analysekit, bestehend aus einem ersten Behälter, einem Blutabnahmeröhrchen und einer Vorrichtung zur Herstellung einer geschlossenen, luftdichten Verbindung zwischen dem Behälter und dem Blutabnahmeröhrchen;
- Fig. 3: eine andere Ausführungsvariante des Analysekits;
- Fig. 4: eine weitere Ausführungsvariante des Analysekits;
- Fig. 5: eine Ausführungsvariante des Analysekits;
- Fig. 6: eine Ausführungsvariante des Analysekits;
- Fig. 7: eine Ausführungsvariante des Analysekits;
- Fig. 8: eine Ausführungsvariante des Analysekits;
- Fig. 9: eine Ausführungsvariante des Analysekits;
- Fig. 10: einen Analysekit zur Abtrennung von zumindest einer Komponente aus einer Probe bestehend aus einem Behälter, einer Aufreinigungseinrichtung mit darin angeordneter Matrix, einem Auffanggefäß und einer Vorrichtung zur Verbin- dung des Behälters mit der Aufreinigungseinrichtung;
- Fig. 11: eine Ausführungsvariante des Analysekits;
- Fig. 12: eine andere Ausführungsvariante des Analysekits nach Fig. 10;
- Fig. 13: eine andere Ausführungsvariante des Analysekits nach Fig. 10;
- Fig. 14: eine andere Ausführungsvariante des Analysekits nach Fig. 10;
- Fig. 15: eine andere Ausführungsvariante des Analysekits nach Fig. 10;
- Fig. 16: einen Analysekit mit einem Behälter, umfassend zwei Teilvolumina;
- Fig. 17: eine Ausführungsvariante der Vorrichtung zur Herstellung einer geschlossenen, luftdichten Verbindung zwischen zwei Behältern;
- Fig. 18: eine Ausführungsvariante des Analysekits zur Abtrennung zumindest einer Komponente aus einer Probe, insbesondere geeignet für Zentrifugen;
- Fig. 19: einen Behälter;
- Fig. 20: eine Vorrichtung zur Zerkleinerung einer Probe biologischen Ursprungs in Be- hälterform;
- Fig. 21: eine Vorrichtung zur Zerkleinerung einer Probe biologischen Ursprungs in Form einer Verschlußeinrichtung;
- Fig. 22: eine Ausführungsvariante der Vorrichtung zur Zerkleinerung einer Probe bio- logischen Ursprungs nach Fig. 21.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

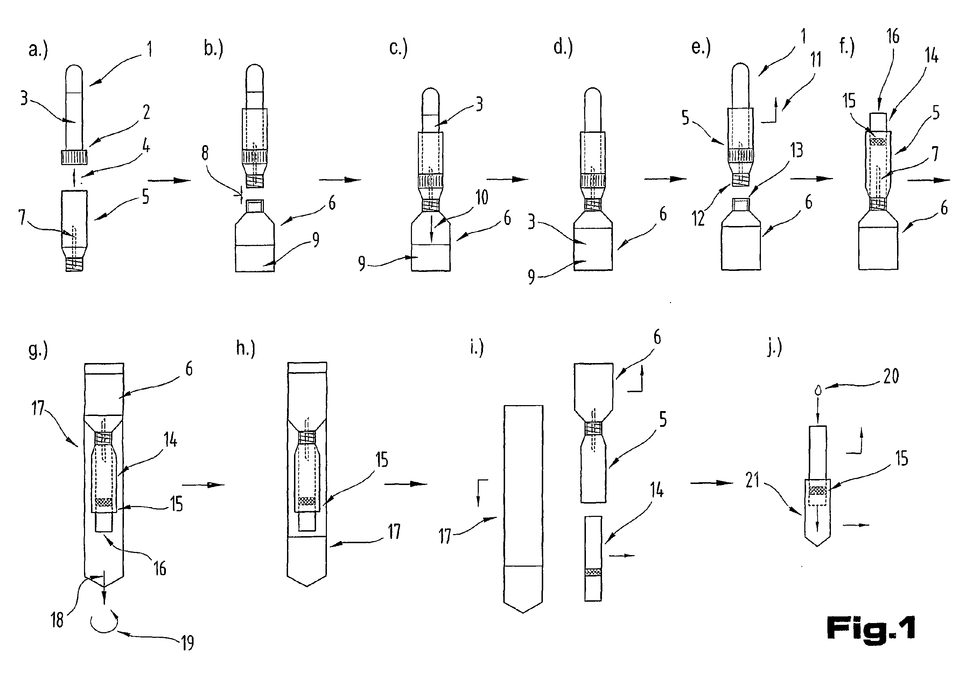

In Fig. 1 ist anhand des Beispiels der Abtrennung von zumindest einer Nukleinsäure aus einer Blutprobe ein möglicher erfindungsgemäßer Verfahrensablauf in den Schritten a.) bis j.) dargestellt.

Es sei bereits an dieser Stelle erwähnt, daß das erfindungsgemäße Verfahren selbstverständlich nicht ausschließlich auf Blutproben beschränkt ist, sondern generell Proben biologischen Ursprungs zur Analyse vorbereitet werden können. Zielsubstanzen können dabei z.B. Nukleinsäuren, Proteine bzw. weitere Moleküle aus der Blutprobe sein, je nachdem, welches Aufreinigungssystem verwendet wird.

Die Probe selbst kann in Form von Vollblut, aber auch in Form von einzelnen Blutkompartimenten, welche durch eine entsprechende Vorbehandlung der Blutprobe, z.B. durch Zentrifugation, gewonnen werden, im erfindungsgemäßen Verfahren eingesetzt werden.

Des Weiteren ist es möglich, wie im folgenden noch näher dargelegt wird, auch feste Proben, wie z.B. Gewebeproben, nach dem Verfahren zu verarbeiten.

Obwohl das Verfahren sowie die hierzu verwendbare Vorrichtung für die Untersuchung und Verarbeitung von Proben biologischen Ursprungs entwickelt wurde, ist es selbstverständlich möglich, dieses generell für analytische Arbeiten, z.B. für die Wasseranalytik oder dgl., einzusetzen und bietet dieses Verfahren insbesondere für Proben einen Vorteil, welche dem oxidativen Abbau, z.B. durch Luftsauerstoff, unterliegen oder die mit Reagenzien bzw. Reagenzgemische versetzt werden, welche ein gesundheitsgefährdendes Potential aufweisen.

Im Sinne dieser Ausführungen ist die folgende Darstellung der Erfindung in der Analyse von Blutproben nicht limitierend zu sehen.

Der Verfahrensschritt a nach Fig. 1 zeigt einen ersten Behälter 1 in Form eines Blutabnahmeröhrchens mit einer Schraubkappe 2. Verwendbar für die Erfindung sind unterschiedlichste, aus dem Stand der Technik bekannte Blutabnahmeröhrchen, beispielsweise aus Glas oder Kunststoff. Da derartige Blutabnahmeröhrchen aus dem Stand der Technik bestens bekannt sind, wird im Folgenden nicht näher darauf eingegangen.

Im Blutabnahmeröhrchen befindet sich eine Urprobe 3, welche im vorliegenden Fall durch Vollblut gebildet ist.

Dieser Behälter 1 wird entsprechend Doppelpfeil 4 in eine Vorrichtung 5 zur Herstellung einer geschlossenen, luftdichten Strömungsverbindung zwischen dem Behälter 1 und einem im Verfahrensschritt b.) dargestellten zweiten Behälter 6 soweit eingeschoben, daß ein Penetrationsmittel 7, welches in der Vorrichtung 5 gehaltert ist, einen in Fig. 1 nicht näher dargestellten Behälterverschluß in Form eines Septums, welches von der Schraubkappe 2 gehaltert wird, penetriert.

Es ist aber auch möglich, daß der Behälter vorerst nur soweit in die Vorrichtung 5 eingeschoben wird, daß dessen Verschluß noch nicht penetriert ist, und erst mit dem Anschluß des zweiten Behälters 6 die Penetration durchgeführt wird.

In weiterer Folge wird der so vorbereitete Behälter 1 mit der Vorrichtung 5 entsprechend Verfahrensschritt b.) an den zweiten Behälter 6 angeschlossen, wie dies durch einen Doppelpfeil 8 verdeutlicht ist. Damit ist zwischen dem ersten Behälter 1 und dem zweiten Behälter 6 über das Penetrationsmittel 7 eine Strömungsverbindung hergestellt und verbindet die Vorrichtung 5 die beiden Behälter 1, 6 damit zu einem geschlossenen, luftdichten System.

Im Behälter 6 ist ein Reagens bzw. ein Reagenzgemisch 9 vorgelegt, welches aus einer Gruppe umfassend einen Lysepuffer für Zellen, wie z.B. Blutzellen, einen Stabilisierungspuffer für Nukleinsäuren bzw. Proteine, einen Freisetzungspuffer, einen Konservierungspuffer und/oder die festen Salze dieser Puffer ausgewählt sein kann. Mit Hilfe dieses Reagens bzw. Reagenzgemisches 9 kann nach dem Transfer der Urprobe 3 aus dem Behälter 1 in den Behälter 6 bzw. eines Teils dieser Urprobe 3, z.B. eines vorbestimmbaren Volumens der Urprobe 3 eine zu bestimmende Komponente bzw. selbstverständlich auch mehrere zu bestimmende Komponenten durch Reaktion mit dem Reagens bzw. Reagenzgemisch 9 derart behandelt werden, daß diese bei Raumtemperatur stabilisiert vorliegen. Dies ist insbesondere bei Blutproben, wie Vollblut, von Vorteil, da, wie bereits ausgeführt, Nukleinsäuren aus den Blutzellen durch RNAsen abgebaut werden, sobald das Blut aus dem lebenden Körper entfernt wird. Unter dem Begriff stabilisiert ist im Zusammenhang mit der Erfindung zu verstehen, daß die Komponente(n) einige Tage, z.B. 3 bis 7 Tage, gegebenenfalls auch über einen längeren Zeitraum, wie z.B. 1 bis 2 Monate zumindest annähernd keine Veränderung durch einen Umgebungseinfluß, z.B. einen Abbau, erfahren. Es ist dieser Begriff aber nicht derart auszulegen, daß die Komponente(n) für einen unbestimmt langen Zeitraum stabilisiert sind. Der Zeitraum ist jedoch so groß, daß die Analyse der Probe biologischen Ursprungs in angemessener Zeit erfolgen kann und gegebenenfalls Rückstellmuster der Probe bereitgestellt werden können.

Die Stabilisierung kann nun derart erfolgen, daß als Reagens bzw. Reagenzgemisch 9 ein Lysepuffer verwendet wird, der zumindest ein chaotropes Salz enthält, wie z.B. ein Guanidiniumsalz, welches aus einer Gruppe umfassend Guanidiniumchlorid, Guanidiniumnitrat, Guanidiniumcarbonat, Guanidiniumdihydrogenphosphat, Guanidiniumhydrogendiphosphat, Guanidiniumsulfat, Guanidiniumsterat, Guanidiniumazetat, Guanidiniumthiocyanat, Guanidiniumaminosulfat ausgewählt sein kann. Das Guanidiniumsalz kann dabei entweder in fester oder flüssiger, d.h. gelöster Form vorliegen, wobei im letzteren Fall die Konzentration des Guanidiniumsalzes im Bereich zwischen 2 M und 8 M liegen kann. Des weiteren kann dieser Lysepuffer auch diverse Zusätze, wie beispielsweise ein Detergenz, ein Reduktionsmittel bzw. eine Puffersubstanz enthalten, wie dies in der WO 00/09746 A in den dort angegebenen Konzentrationsbereichen vorgeschlagen wird.

Es sei an dieser Stelle bemerkt, daß sofern Lösungen eingesetzt werden vorzugsweise wäßrige Lösungen als Reagens bzw. Reagenzgemisch 9 verwendet werden. Es können aber auch andere Lösungsmittel, wie z.B. ein Alkohol, z.B. ein Ethanol/Wasser Gemisch, verwendet werden.

Abhängig von der Zielsubstanz, d.h. der abzutrennenden Komponente aus der Urprobe 3 kann der Lysepuffer auch andersartig zusammengesetzt sein und beispielsweise aus einer Carbonsäure, einer Sulfonsäure oder einem Phenol bzw. Gemische daraus gebildet sein. Verwendbare Carbonsäuren sind z.B. Essigsäure, Zitronensäure, Milchsäure, verwendbare Sulfonsäuren sind Schwefelsäure, Benzolsulfonsäure, p-Tololsulfonsäure, m-Nitrobenzolsulfonsäure, Alkansulfonsäuren und kann ein verwendbares Phenol aus einer Gruppe umfassend p-Nitrophenol, m-Nitrophenol, o-Nitrophenol, 2,4-Dinitrophenol, p-Chlorphenol, p-Cyanophenol, 1-Chlor-2,4 Dinitrophenol ausgewählt sein. Vorzugsweise werden diese lytischen Reagenzien in einer Konzentration zwischen 0,1 bis 1 Vol.-% zugesetzt.

Durch die Verwendung derartiger Lysepuffer ist aufgrund der Freisetzung der Nukleinsäuren aus den Zellen eine weitere Stabilisierung nicht erforderlich.

Andererseits ist es aber möglich, daß das Reagens bzw. Reagenzgemisch 9 durch einen Konservierungspuffer, beispielsweise Ammoniumsulfat gebildet ist. Diese Konservierungspuffer können zum Unterschied zu den Lysepuffern protein-präzipitierende Eigenschaften aufweisen, wie die bereits angesprochenen Guanidiniumsalze bzw. auch Harnstoff.

Selbstverständlich ist auch eine Kombination eines derartigen Konservierungspuffers mit einem Lysepuffer als Reagens bzw. Reagenzgemisch 9 möglich, beispielsweise eine Kombination von Ammoniumsulfat mit Guanidiniumthiocyanat bzw. generell eine Kombination aus Ammoniumsulfat mit einem chaotropen Salz. Durch deren getrennten Einsatz, d.h. daß diese Reagenzien 9 in verschiedenen Behältern vorgelegt sind, wird es aber möglich, daß mittels des Konservierungspuffers am Ort der Probenziehung diese Urprobe soweit stabilisiert wird, daß sie ohne weitere Vorkehrungen transportiert werden kann, und daß in einem Labor in der Folge die Freisetzung der Komponente(n) mit dem Lyse- bzw. Freisetzungspuffer erfolgt.

Es ist weiters möglich, die Konzentration des Guanidinumsalzes so weit zu verringern, daß zwar eine Stabilisierung der Urprobe 3 bzw. der darin enthaltenen Komponente, aber keine Lyse erfolgt.

Wie bereits erwähnt, können weitere Puffersubstanzen, wie z.B. Natriumcitrat, Tris bzw. Tris/ HCl zugesetzt sein, um einen ph-Wert der Lösung in einem Bereich von 5 und 7 zu halten.

Eine mögliche Reagenzzusammenzusetzung, insbesondere für Vollblut, umfaßt z.B. 10 bis 100 Gew.-% Ammoniumsulfat, 1 bis 6 mol/l eines chaotropen Salzes, wie z.B. Guanidiniumthiocyanat, sowie im Bereich zwischen 0,1 bis 0,5 mol/l einer Puffersubstanz, z.B. Natriumcitrat bzw. Tris/HCl. Vorzugsweise wird eine Zusammensetzung verwendet mit 5 bis 70 Gew.-% Ammoniumsulfat, 2 bis 4 mol/l eines chaotropen Salzes, sowie 0,2 bis 0,4 mol/l einer Puffersubstanz, insbesondere ein Gemisch mit 50 bis 60 Gew.-% Ammoniumsulfat, 3 bis 4 mol/l eines chaotropen Salzes sowie 0,3 bis 0,4 mol/l einer Puffersubstanz. Andere Zusammensetzungen, obwohl nicht ausdrücklich angegeben, sind selbstvertändlich auch möglich.

Als Detergenz haben sich, insbesondere Laurylsarkosinat, Natriumdodecyl-Sulfat, als Reduktionsmittel 2 - Mercaptoethanol, Dithiothreitol bewährt.

Es können weiters z.B. Komplexbildner wie EDTA zugesetzt sein.

Zur Konservierung, beispielsweise von Säugerzellen, kann weiters eine Alkohol-Puffer-Lösung im Behälter 6 vorgelegt sein. Dabei dient der Alkohol zur Fixierung der Säugerzellen, so daß also eine entsprechende Menge, die vorbestimmbar ist, vorgelegt werden muß. Als Alkohol haben sich vor allem Ethanol oder Methanol als günstig erwiesen. Weiters kann diese Lösung als Komplexbildner zur Verhinderung von Klumpenbildung EDTA enthalten. Als Puffer kann neben EDTA auch PBS, Tris, Natriumacetat, Zitronensäure oder dgl. verwendet werden.

Selbstverständlich ist es möglich, z.B. den Konservierungspuffer und den Lysepuffer in getrennten Behältern 6 vorzulegen, insbesondere wenn durch Reaktion einzelner Komponenten der beiden Puffer eine vorzeitige Alterung und damit Unbrauchbarkeit dieser Puffer zu erwarten ist. In diesem Fall ist es möglich, mit Hilfe des geschlossenen, luftdichten Systems, wie dies in z.B. Fig. 1 c.) dargestellt ist, die Probe in mehreren Schritten zuerst in einem Behälter 6 mit einem Konservierungspuffer und in der Folge einem weiteren Behälter 6 mit einem Lysepuffer zuzuführen. Dabei kann der erste Schritt, also der Transfer des Blutes in den Konservierungspuffer bereits durch den Arzt in der Arztpraxis vorgenommen werden, wodurch sich der Vorteil erreichen läßt, daß ein Niedertemperaturtransport des Blutes in das Labor, wie er derzeit üblich ist, vermieden werden kann. Im Labor selbst kann dann in der Folge die Zugabe der chaotropen Substanz erfolgen.

Vorzugsweise ist die Zusammensetzung des vorgelegten Reagens bzw. Reagenzgemisches 9, insbesondere hinsichtlich der Konzentration auf ein vorbestimmbares Volumen an Urprobe 3, welches aus dem Behälter 1 in den Behälter 6 überführt wird, abgestimmt. Zur Sicherheit ist es selbstverständlich auch möglich, die Komponente(n) des Reagens bzw. Reagenzgemisches 9 im Überschuß vorzulegen.

Weiters ist es möglich, um ein vorbestimmbares Volumen an Urprobe 3 in den Behälter 6 zu überführen, den Behälter 6 zu evakuieren, wobei der Unterdruck dem gewünschten, zu überführenden Volumen an Urprobe 3 angepaßt ist.
Es besteht jedoch die Möglichkeit, wie im folgenden noch dargestellt wird, dies mit Hilfe anderer Einrichtungen zu erzielen.

Vorteilhaft an dieser Vorgangsweise ist, daß nunmehr problematische Reagenzien, wie dies insbesondere auf die Gesundheit eines lebenden Organismus Guanidiniumsalze sind, in einem gesonderten Behälter vorliegen, also keine Gefahr besteht, daß der Organismus bei der Probenziehung mit diesen Reagenzien 9 in Berührung kommt, wobei aufgrund des geschlossenen Systems bei der der Probenziehung nachfolgenden Überführung der Urprobe 3 in den Behälter 6 auch die Gefahr vermieden wird, daß der Anwender bei sachgerechter Anwendung des Systems bzw. Verfahrens mit der Urprobe 3 in Kontakt kommt. Damit läßt sich auch eine entsprechende Verunreinigung der Urprobe 3 vermeiden. Es wird damit möglich, die Kosten für Labors insoweit zu reduzieren, als das erfindungsgemäße Verfahren auch von weniger qualifiziertem Personal gefahrlos gehandhabt werden kann und in der Folge die Personalkosten entsprechend gesenkt werden können. Zudem lassen sich aufgrund der vorbereiteten Komponenten des Systems eine entsprechende Arbeitsvereinfachung und ein entsprechender Zeitgewinn realisieren.

Nachdem die Urprobe 3 bzw. zumindest ein Teil der Urprobe 3 in den Behälter 6 überführt worden ist, wie dies in Fig. 1 c.) mit einem Pfeil 10 angedeutet ist, liegt, wie Fig. 1 d.) zeigt, im Behälter 6 ein Gemisch aus der Urprobe 3 mit dem Reagens bzw. Reagenzgemisch 9 vor.

In der Folge wird der erste Behälter 1 wieder vom Behälter 6 getrennt. Die Trennung erfolgt dabei derart, daß die Vorrichtung 5, welche zwischen den beiden Behältern 1,6 eine Strömungsverbindung hergestellt hat, zusammen mit dem Behälter 1 abgezogen wird und zwar unabhängig davon, ob der Anwender zur Trennung den ersten Behälter 1 oder die Vorrichtung 5 verwendet, d.h. diesen berührt.

In der Folge kann der erste Behälter 1 zusammen mit der Vorrichtung 5 entsprechend Pfeil 11 entsorgt werden (Fig. 1 e.)) bzw., sollte nur ein Teil der ursprünglich darin befindlichen Urprobe 3 in den Behälter 6 überführt worden sein, als Sicherungsmuster für spätere Analysen gelagert werden. Dabei ist es möglich, die Vorrichtung 5 auf dem Behälter 1 zu belassen, so daß die Vorrichtung 5 auch für spätere Analysen noch verwendbar ist und kann in diesem Fall ein Bereich 12 der Vorrichtung, welcher in Verwendungsposition der Vorrichtung 5 dem Behälter 6 zugewandt ist, mit einem entsprechenden Verschluß, z.B. einer Schraubkappe, gesichert werden.
Der zweite Behälter 6, welcher ebenfalls mit einem Septum 13 versehen und damit selbstverschließend ist, kann, nachdem nun die Zielsubstanz in der Raumtempertatur in stabiler Form vorliegt, entweder zwischengelagert werden oder der weiteren Vorbereitung zur Analyse zugeführt werden. Dazu ist es, wie in Fig. 1 f.) dargestellt, von Vorteil, an den Behälter 6 neuerlich eine Vorrichtung 5 anzuschließen, wenngleich die Luftdichtheit nicht mehr erforderlich ist, da die Auftrennung vorzugsweise mit Hilfe einer Aufreinigungsvorrichtung 14, z.B. einer Aufreinigungssäule, mit einer darin gehalterten Matrix 15 verwendet wird und diese Aufreinigungsvorrichtung 14 in einem dem Behälter 6 gegenüberliegenden Endbereich 16 offen ausgebildet ist, um das Ablaufen des Probengemisches aus dem Behälter 6 zu ermöglichen. Diese Vorgangsweise bietet jedoch den Vorteil, daß einerseits die Aufreinigungseinrichtung 14 über die Vorrichtung 5 fixiert werden kann, wie im folgenden noch näher ausgeführt wird, und weiters, daß unterschiedlichste Aufreinigungsvorrichtungen 14 mit in gewissen Grenzen des Durchmessers der Vorrichtung 5 variablen Durchmessern verwendet werden können. Darüber hinaus kann andererseits durch das Penetrationsmittel 7 der Vorrichtung 5 aufgrund dessen geringen Durchmessers eine Fragmentierung von Nukleinsäuren während des Ablaufens der Probe aus dem Behälter 6 erreicht werden.

In der Folge wird der Behälter 6 mit der angeschlossenen Aufreinigungsvorrichtung 14 verkehrt, d.h. mit der Aufreinigungsvorrichtung 14 nach unten weisend in einen weiteren Behälter 17 eingeführt, wobei der Behälter 6 im oberen Bereich des Behälters 17 gehaltert werden kann, so daß also der offene Endbereich 16 der Aufreinigungseinrichtung 14 nicht bis in einen Bodenbereich 18 des Behälters 17 reicht, wie dies in Fig. 1 g.) dargestellt ist. Gegebenenfalls kann der Behälter 17 noch mit einer Verschlußkappe, z.B. einer Schraubkappe (in Fig. 1 g.) nicht dargestellt) verschlossen werden.

Der Behälter 17 kann beispielsweise als Zentrifugenröhrchen, z.B. mit 50 ccm Inhalt ausgebildet sein. Es ist damit möglich auf Standardgrößen derartiger Zentrifugenröhrchen zurückzugreifen, wodurch sich das System mit bereits bekannten Komponenten zu einem Analysekit kombinieren läßt.

Wie in Fig. 1 g.) durch einen Kreispfeil 19 angedeutet, wird das im Behälter 6 befindliche Proben/Reagenz-Reaktionsgemisch aus dem Behälter 6 über die Aufreinigungsvornchtung 14, d.h. die Matrix 15 mittels Zentrifugalkraft geleitet und wird die abgetrennte Flüssigkeit, wie dies in Fig. 1 h.) dargestellt ist, vom Behälter 17 aufgefangen. Während des Überleitens wird die zu bestimmende Zielsubstanz bzw. -substanzen von der Matrix 15 zurückgehalten, so daß nachdem, wie in Fig. 1 i.) dargestellt ist, der Behälter 6 mit der Vorrichtung 5 aus dem Behälter 17 gegeben und von der Aufreinigungsvorrichtung 14 getrennt wurde, die Zielsubstanz(en) zur weiteren Bearbeitung isoliert zur Verfügung steht(en).

Der Behälter 17 samt Inhalt kann entweder verworfen werden oder, sollten darin noch weitere Zielsubstanzen vorhanden sein, einer weitergehenden Aufarbeitung zugeführt werden.

Ebenso kann der Behälter 6 mit der Vorrichtung 5 gegebenenfalls getrennt verworfen werden.

Wie schließlich in Fig. 1 j.) dargestellt ist, wird bzw. werden die Zielsubstanz(en) abschließend, bevor diese der Analyse, z.B. einer PCR, zugeführt wird bzw. werden, von der Matrix 15 mit Hilfe eines Eluierungsmittels 20 - in Fig. 1 j.) in Form eines Tropfens dargestellt - in einen vierten Behälter 21 eluiert.

In einer Ausführungsvariante zu dieser Verfahrensweise besteht die Möglichkeit, daß anstelle des Behälters 17, z.B. des Zentrifugenröhrchens, ein Behälter verwendet wird, der mit einer Vorrichtung zur Herstellung einer luftdichten, geschlossenen Strömungsverbindung zwischen dem Behälter und dem weiteren Behälter 17 verbunden wird, wobei die Aufreinigungsvorrichtung 14 auch in diesem Fall in den weiteren Behälter 17 ragen kann.

Ebenso denkbar ist es natürlich, daß die Aufreinigungsvorrichtung 14 Teil der Vorrichtung 5 ist bzw. diese Vorrichtung 5 für diesen Verfahrensschritt ausbildet. Weiters besteht die Möglichkeit, daß für sämtliche weiteren Verfahrensschritte jeweils ein geschlossenes, luftdichtes System zwischen zwei Behältern hergestellt wird, indem die einzelnen Behälter über die Vorrichtung 5 miteinander verbunden werden, beispielsweise Waschbehälter die Waschflüssigkeit enthalten, um von der an der Matrix 15 gebundenen Zielsubstanz anhaftende Reste des Proben/Reagenz-Reaktionsgemisches in einem oder mehreren Schritten abzuwaschen.

Weiters kann das Eluationsmittel 20 in einem derartigen Behälter aufbewahrt sein und über die Vorrichtung 5 mit einem weiteren, das Eluat auffangenden Behälter über die Vorrichtung 5 verbunden sein.

Für den Transfer der Flüssigkeit kann, wie bereits beschrieben, die Zentrifugalkraft verwendet werden. Ebenso besteht die Möglichkeit, mittels Unter- oder Überdruck in einem Behälter den Transfer der Flüssigkeit zu bewirken.
Durch die Erfindung wird also dem Anwender ein Verfahren mit einem multi-modularen geschlossenen System zur Verfügung gestellt, mit dem Proben derart für spätere Analysen aufgereinigt bzw. konserviert werden können, so daß für den Anwender kein bzw. auf ein Minimum reduziertes Risiko einer Infektion bei problematischen biologischen Proben, wie z.B. Blut, besteht. Darüber hinaus kann durch die Ausbildung der Vorrichtung zur Verbindung von zwei Behältern das erfindungsgemäße Verfahren für unterschiedlichste Blutprobenröhrchen verwendet werden und ist somit das System zumindest zum Teil herstellerunabhängig, sofern eine Möglichkeit der Penetration des Blutabnahmeröhrchens besteht.

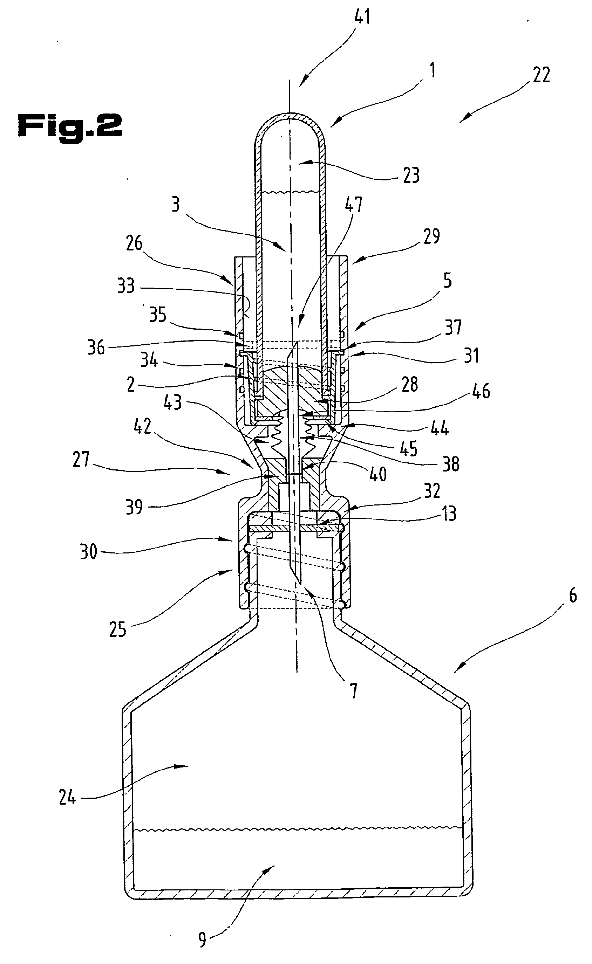

Fig. 2 zeigt einen Analysekit 22 bestehend aus dem ersten Behälter 1 mit einem Innenraum 23, dem zweiten Behälter 6 mit einem Innenraum 24, der in der gegenständlichen Ausführungsvariante des Reagens 9 bzw. Reagenzgemisch zur Aufbereitung bzw. Analyse z.B. einen Lysepuffer enthält, einer Vorrichtung 5, die zwischen den Behältern 1, 6 angeordnet ist und über die eine geschlossene, luftdichte Srömungsverbindung der beiden Innenräume 23, 24 der Behälter 1, 6 hergestellt werden kann. Diese Vorrichtung 5 weist in den beiden einander gegenüberliegenden Endbereichen einen ersten bzw. zweiten Anschlußbereichen 25 und 26 zur Aufnahme eines Teils der Behälter 1, 6 auf. Selbstverständlich ist es möglich, daß diese Anschlußbereiche 25, 26 anders als in Fig. 2 dargestellt angeordnet sind, z.B. rechtwinkelig zueinander, bzw. können mehr als zwei Anschlußbereiche 25, 26 vorhanden sein, so daß es möglich ist, dem Behälter 6 gleichzeitig mit der Probentransferierung auch ein weiteres Reagens bzw. Reagenzgemisch 9 zuzuführen.

Zwischen diesen Anschlußbereichen 25, 26 ist ein Mittelbereich 27 ausgebildet.

Der erste, untere Anschlußbereich 25 dient zur Aufnahme des Behältereinlasses, d.h. eines Halses des Behälters 6 und der zweite Anschlußbereich 26 zur Aufnahme des Behälters 1.

Der Behälter 1 kann, wie bereits erwähnt, als Blutprobenröhrchen ausgebildet sein, das mit einer ein Septum 28 aufweisenden Verschlußkappe, z.B. der Schraubkappe 2, ausgestattet ist. Selbstverständlich ist es möglich, daß das Septum 28 ohne weitere Hilfsmittel, wie die Schraubkappe 2, am Behälter 1 angeordnet ist, wie dies aus dem Stand der Technik bekannt ist.

Das Blutprobenröhrchen beinhaltet im vorliegenden Beispiel Vollblut, es kann aber z.B. auch eine beliebige Blutfraktion, beispielsweise Plasma, Serum, oder aber auch eine beliebige andere Probe, wie beispielsweise Gewebeproben humanen, animalen oder pflanzlichen Ursprungs enthalten sein. Ebenso können Zellen, z.B. Tumorzellen, mononukleare Zellen, polymorphkernige Zellen, CD 34* Stammzellen, Buffy-Coat, andere menschliche und tierische Körperflüssigkeiten, wie z.B. Exsudate, Transudate, Urin, Zerebrospinalflüssigkeit, Stuhl, Zellhomogenisate, Zellkulturen etc. enthalten sein.

Die jeweilige Form, wie diese Urprobe 3 im Behälter 1 vorliegt, richtet sich also nach deren Vorbehandlung, wie z.B. der Zentrifugation.

Die Vorrichtung 5 ist vorzugsweise so ausgebildet, daß zumindest ein Anschlußbereich 25, 26 in Form eines Zylinders 29, 30 mit einem Zylindermantel 31, 32 ausgebildet ist, insbesondere der Anschlußbereich 26 für den Behälter 1, also das Blutprobenröhrchen. Der letztere Zylindermantel 31 kann dabei aus einem verformbaren Werkstoff bestehen, der die äußeren Konturen des Blutprobenröhrchens, insbesondere eines Teils der Schraubkappe 2, bei eingeschobenen Blutprobenröhrchen nachbildet. Mit einer derartigen Ausbildung kann auf einfache Weise erreicht werden, daß das Blutprobenröhrchen bzw. der Behälter 1 sehr fest in dem Anschlußbereich 26 festgehalten wird, z.B. mittels Reibschluß. Selbstverständlich sollte der Mantel aber nicht aus einem Werkstoff gefertigt sein, der so flexibel ist, daß er die Aufnahme des Blutprobenröhrchens verhindert.

Andererseits besteht die Möglichkeit, um den Behälter 1 im Anschlußbereich 26 der Vorrichtung 5 zu fixieren, an einer inneren Manteloberfläche 33 des Zylinders 29 der Vorrichtung 5, welche dem Behälter 1 zugewandt ist, eine oder mehrere Rasteinrichtungen 34, wie dies in Fig. 2 dargestellt ist, vorzusehen. Diese Rasteinrichtung 34 kann dabei in Form einer nutförmigen Ausnehmung 35 in der Manteloberfläche 33 ausgebildet sein. Ebenso ist es denkbar, daß anstelle oder zusätzlich zu dieser nutförmigen Ausnehmung 35, welche vorzugsweise über den gesamten inneren Umfang des Zylinders 29 umlaufend ausgebildet ist, ein vorspringender, insbesondere umlaufender Steg 36, in Fig. 2 strichliert dargestellt, ausgebildet ist. Damit wird erreicht, daß, sofern die Schraubkappe 2 des Behälters 1 bzw. allgemein eine Verschlußvorrichtung für den Behälter 1 ebenfalls an zumindest einer Stelle einen Ringsteg 37, wie dies in Fig. 2 dargestellt ist, aufweist, daß dieser Ringsteg 37 entweder in eine von bevorzugt mehreren Ausnehmungen 35 eingreift bzw. in Richtung auf den Behälter 6 unterhalb des Steges 36 einrastet und damit fixiert und gegen ein unbeabsichtigtes Herausziehen des Behälters 1 aus der Vorrichtung 5, d.h. dem Anschlußbereich 26 der Vorrichtung 5, gesichert ist.

Anstelle dieses Mittels zur Halterung und/oder Fixierung des Behälters 1 im Anschlußbereich 26 der Vorrichtung 5 ist es selbstverständlich möglich, auch andere Mittel zu diesem Zweck in der Vorrichtung 5, d.h. im Anschlußbereich 26 anzuordnen bzw. diesen dazu auszubilden. Eines davon wurde bereits angesprochen, indem nämlich der Durchmesser des Zylinders 29 des Anschlußbereiches 26 für den Behälter 1 an den äußeren Durchmesser des Behälters 1 bzw. von dessen Schraubkappe 2 angepaßt wird, so daß zwischen dem Zylinder 29, d.h. von dessen inneren Manteloberfläche 33 und dem Behälter 1 ein Reibschluß entsteht.

Andererseits besteht die Möglichkeit, an besagter Manteloberfläche 33 eine Art Schraubgewinde auszubilden, so daß also ein mit einer mit dem Ringsteg 37 versehenen Schraubkappe 2 ausgestatteter Behälter 1 in diesen Anschlußbereich 26 eingeschraubt werden kann.

Mit all diesen Mitteln und Vorkehrungen zur Halterung und/oder Fixierung des Behälters 1 im Anschlußbereich 26 soll ermöglicht werden, daß auf diesen Behälter 1 eine Kraft ausgeübt wird, die größer ist als die Kraft, die der Behälter 6 im weiteren Anschlußbereich 25 einer Trennung von dem Anschlußbereich 25 für den Behälter 6 entgegensetzt. Somit soll also durch das Abziehen des Behälters 1 gleichzeitig auch die Vorrichtung 5 vom Behälter 6 getrennt werden.

Zwischen dem ersten und zweiten Anschlußbereich 25, 26 der Vorrichtung 5 ist ein Stömungskanal 38 angeordnet, der als Zwei-Wege-Nadel bzw. Kanüle ausgebildet sein kann. Dieser Strömungskanal 38 ist vorzugsweise im Mittelbereich 27 der Vorrichtung 5 zentriert gehaltert. Dazu kann eine eigene Halteeinrichtung 39, z.B. ein entsprechender Formteil, beispielsweise aus Kunststoff, im Mittelbereich 27 der Vorrichtung 5 angeordnet sein. Diese Halteeinrichtung 39 kann dabei in ihrer Geometrie so bemessen sein, daß ein Reibschluß zwischen der Oberfläche der Halteeinrichtung 39 und einer inneren Oberfläche im Mittelbereich 27 der Vorrichtung 5 erzeugt wird. Ebenso sind andere Befestigungsmethoden, z.B. Kleben, Schrauben etc. möglich.

Die Halteeinrichtung 39 weist bevorzugt zentral eine durchgehende Ausnehmung 40 auf, durch welche und von der der Strömungskanal 38 geführt wird und gehaltert ist.

Selbstverständlich muß diese Ausnehmung 40 nicht zentriert angeordnet sein, so daß also je nach Bedarf der Strömungskanal 38 auch dezentral gehaltert sein kann.

Weiters ist es nicht zwingend erforderlich, daß die Halteeinrichtung 39 als gesonderter Teil ausgeführt ist, sondern kann diese auch einstückig mit der Vorrichtung 5 verbunden sein, also bereits während der Herstellung der Vorrichtung 5, z.B. im Spritzgußverfahren, ausgeformt werden.

Es ist ebenfalls nicht zwingend erforderlich, daß der Strömungskanal 38 als Zwei-Wege-Nadel ausgeführt ist, und können sämtliche geeignete, funktionsgleiche oder -ähnliche Einrichtungen zur Herstellung einer Strömungsverbindung verwendet werden, wie dies in den nachfolgenden Ausführungsvarianten noch näher dargestellt wird.

Die Vorrichtung 5 kann bevorzugt in Verlauf ihrer Längserstreckung, d.h. entlang einer Längsmittelachse 41, eine Verjüngung 42 aufweisen, z.B. im Mittelbereich 27 zwischen den beiden Anschlußbereichen 25, 26. Diese Verjüngung 42 bietet den Vorteil, daß die Vorrichtung 5 an dieser Stelle für den Verwender besser haltbar ist. Es ist dabei möglich, daß im Bereich dieser Verjüngung Griffflächen ausgebildet sind, die z.B. auch über eine Rändelung verfügen, um beispielsweise die Angreifbarkeit mit nassen Fingern oder Handschuhen zu verbessern.

Zwischen dem Mittelbereich 27 und dem oberen Anschlußbereich 26 für den Behälter 1 ist vorzugsweise ein Hohlraum 43 in der Vorrichtung 5 angeordnet. Dieser Hohlraum 43 kann in Richtung der Längsmittelachse 41 von einem umlaufenden Steg 44 im Bereich des Behälters 1, d.h. im Bereich einer Endfläche 45 der Schraubkappe 2, und in Richtung auf den unteren Behälter 6 von bereits erwähnter Halteeinrichtung 39 für den Strömungskanal 38 zumindest teilweise begrenzt sein. Die seitliche Begrenzung bildet die Wandung der Vorrichtung 5.

Der Hohlraum 43 kann beispielsweise zur zumindest teilweisen Aufnahme einer den Strömungskanal 38 zumindest in einem Endbereich bereichsweise abdeckenden Schutzkappe 46, z.B. eines aus dem Stand der Technik bekannten Schlauchventils, ausgebildet sein. Beim Aufschieben des Behälters 1, d.h. Einschieben in den oberen Anschlußbereich 26, wird die elastisch ausgebildete Schutzkappe 46 durch die Verdrängung mit der Schraubkappe 2 des Behälters 1 in den Hohlraum 43 zumindest teilweise geschoben, wie dies in Fig. 1 dargestellt ist.

Im Zustand des in den Anschlußbereich 26 eingeführten Behälters 1 penetriert der mit der Schutzkappe 46 geschützte Strömungskanal 38 das Septum 28 bevorzugt bis zu dessen in auf den Innenraum 23 des Behälters 1 weisenden Oberfläche. Diese Ausführung ermöglicht, daß insbesondere dann, wenn das Septum - nicht in Fig. 2 dargestellt - in Richtung auf den Innenraum 23 gesehen konvex, sondern koncav gewölbt ist, der Behälter 1 zumindest annähernd vollständig entleert werden kann.

Selbstverständlich ist es möglich, daß, wie in Fig. 2 dargestellt, der Strömungskanal 38 länger bemessen ist, so daß ein Strömungskanalendbereich 47 in den Innenraum 23 des Behälters 1 vorragt.

Zur Penetration des Septums 28 des Behälters 1 sowie des Septums 13 des Behälters 6 ist in zumindest einem Anschlußbereich 25, 26, bevorzugt in beiden Anschlußbereichen 25, 26, zumindest ein Mittel zur Penetration eines Behälterverschlusses angeordnet. Wie in Fig. 2 dargestellt, kann dieses Penetrationsmittel 7 durch den Strömungskanal, im speziellen Fall der Fig. 2 durch die spitz zulaufenden Endbereiche der doppelendigen Kanüle gebildet sein.

Mit Hilfe eines derart ausgestalteten Strömungskanals 38, sowie bei entsprechender Bemessung der Septen 28, 13, d.h. wenn z.B., wie in Fig. 2 dargestellt, das Septum 28 des Behälters 1, also des Blutprobenröhrchens in seiner Längserstreckung in Richtung der Längsmittelachse 41 länger bemessen ist, als die Längserstreckung in gleicher Richtung des Septums 13 des Behälters 6 und/oder wenn für diese beiden Septen 13, 28 unterschiedliche Werkstoffe verwendet werden, ist es möglich, auf diesen Strömungskanal 38 eine unterschiedliche Kraft auszuüben, so daß also der Strömungskanal 38 vom Behälter 1, d.h. das Septum 28 mit einer größeren Kraft fixiert wird, als vom Septum 13 des Behälters 6. Dadurch wird erreicht, daß beim Abziehen des Behälters 1 vom Behälter 6 die Vorrichtung 5 mitabgezogen wird. Diese Ausbildung kann ergänzend zu vorstehenden Halteeinrichtungen für den Behälter 1, wie beispielsweise die Rasteinrichtung, oder alternativ hierzu ausgebildet sein.

Im oberen Anschlußbereich 26 kann die Verbindung mit dem Behälter 1 durch eine trennbare Verbindung, z. B. als Schraubverbindung, Bajonettverbindung, reibschlüssige Verbindung etc. etabliert sein. Bei der Ausprägung als Bajonettverbindung ist von Vorteil, daß diese nur eine Achtel- bis eine Vierteldrehung des Strömungskanals 38 nach Durchstoßen des Septums 28 erfordert. Größere Drehungen im Septum 28 könnten einen größeren Abrieb desselben verursachen und folglich eine Kontamination der in dem Behälter 1 befindlichen Urprobe 3 bewirken.

Das hier beschriebene System kann beispielsweise in einer Arztpraxis, einem Labor oder im Krankenhaus, z.B. in der RNA/DNA-Analytik, zum Einsatz kommen. Durch seine Bauweise erlaubt es insbesondere ein aseptisches Arbeiten für den Laboranten. Die Vorrichtung 5 zur Herstellung einer Strömungsverbindung kann eine unbeabsichtigte Kontamination verhindern, beispielsweise im Fall von Blut, insbesondere bei der Überführung des Blutes in den unteren Behälter 6. Zudem kann die Sicherheit des Systems dadurch erhöht werden, daß auch dem unteren, dem Innenraum 24 des Behälters 6 zugewandten Endbereich des Strömungskanals 38 eine Schutzkappe, z.B. ein Schlauchventil, zugeordnet wird, die aus einem elastischen, selbstverschließenden Werkstoff, z.B. einem Gummi, hergestellt wird. Durch sofortiges Schließen des Schlauchventiles nach Abschluß des Überleitungsvorganges und dem Herausnehmen der Vorrichtung 5 aus dem Behälter 6 wird ein Austropfen der Flüssigkeit verhindert.

Der Behälter 6 kann zum Zwecke der Lagerung, z.B. für zu späteren Zeitpunkten möglicherweise erforderliche Nachuntersuchungen, mit geeigneten Mitteln gekennzeichnet werden, z.B. mittels eines Klebeetiketts, an dem u.U. ein Barcode angebracht ist, eines Speicherchips, und unter Kühlung aufbewahrt werden.

Der Strömungskanal 38 kann in der Vorrichtung 5 zur Herstellung einer Strömungsverbindung zwischen den Behältern 1, 6 auch auswechselbar gehaltert sein. Dazu kann im Mittelbereich 27, z.B. in der Halteeinrichtung 39, ein Schraubgewinde angeordnet werden, in welches der Strömungskanal 38, welcher in diesem Fall an einer äußeren Oberfläche ebenfalls ein Schraubgewinde aufweist, in die Vorrichtung 5 eingeschraubt wird.

Weiters ist es möglich, die beiden Anschlußbereiche 25, 26 mit einem unterschiedlichen Innendurchmesser bzw. gegebenenfalls in der Folge auch mit einem unterschiedlichen Außendurchmesser auszubilden, womit erreicht werden kann, daß bei entsprechender Ausbildung der weiteren Bestandteile des Analysekits 22, beispielsweise des Durchmessers des Halses des Behälters 6, im Vergleich zum Durchmesser des Behälters 1 bzw. dessen Schraubkappe 2 die Vorrichtung 5 nicht "verkehrt" an die Behälter 1, 6 angeschlossen wird.

Weiters ist von Vorteil, wenn der Strömungskanal 38, wie in Fig. 2 dargestellt, nicht über die beiden offenen Endbereiche der Vorrichtung 5 hinausragt, so daß also der Anwender mit dem Penetrationsmittel 7 nur in Berührung kommt, wenn er bewußt in die Anschlußbereiche 25, 26 hineingreift.

Für den Fall, daß die Vorrichtung 5 einen weiteren bzw. weitere Anschlußbereiche für einen dritten oder mehrere Behälter aufweist, können selbstverständlich diese Anschlußbereiche, wie eben beschrieben, ausgebildet sein.

Die Septen 13, 28 können, wie aus dem Stand der Technik bekannt, aus Brombuthylkautschuk hergestellt sein.

Im Falle der Ausbildung des Behälters 1 als Blutprobenröhrchen kann dieses gegebenenfalls, sollte vor der Anwendung des erfindungsgemäßen Verfahrens eine Zentrifugation erfolgen, ein Gel enthalten, wie dies aus dem Stand der Technik bekannt ist, mit dem eine Trennung in Plasma und Serum während der Zentrifugation erfolgen kann.

Zur Verarbeitung von Zellfraktionen, z.B. aus Blutproben, kann es von Vorteil sein, wenn der Behälter 1 mit einer Klappe, entsprechend der WO 00/46585 A im Innenraum 23 ausgebildet wird. Die Offenbarung dieser WO-A ist Teil der Offenbarung gegenständlicher Patentanmeldung.

Der Behälter 1 kann in diesem Falle wiederum als Zentrifugationsröhrchen ausgebildet sein, z.B. mit 50 ml Fassungsvolumen, wobei der Hals dieses Zentrifugationsröhrchens mit einem Septum ausgestattet ist, das über eine Schraubkappe 2 fixiert werden kann. Der Durchmesser des Halses ist bevorzugt so ausgebildet, daß ein herkömmlicher Blutabnahmeadapter angeschlossen werden kann, so daß also dieses Zentrifugationsröhrchen zur Blutabnahme verwendet werden kann. Selbstverständlich sind bei entsprechender Anpassung der Größe des Blutabnahmeadapters auch andere Halsdurchmesser des Behälters 2 möglich. Innerhalb dieses Behälters 1 befindet sich die bereits angesprochene Klappe. Diese Klappe kann den Boden des Zentrifugationsröhrchens ausbilden, also der Boden entgegen den bisher bekannten Zentrifugationsröhrchen mit konisch zulaufenden Böden, zumindest annähernd eben ausgebildet sein. Weiters ist es möglich, den Boden, z.B. vor und nach der Zentrifugation mit einem Deckel dicht zu verschließen, beispielsweise für den Transport. Vorzugsweise ist dieser Behälter 1 evakuiert, beispielsweise um ein Volumen von 25 bis 30 mm Blut damit abnehmen zu können. Dieser Behälter kann dann in der Folge, nachdem der Deckel vom Boden z.B. abgeschraubt worden ist, wiederum in ein größeres Übergefäß, z.B. ein 50 ml Zentrifugationsröhrchen, eingebracht werden, in welchem ein Zelltrennmedium vorgelegt ist, wie dies z.B. unter der Marke OncoQuick^{®}, beziehbar bei Hexal Gentech Forschungs GmbH in D-83607 Holzkirchen bzw. der Greiner Bio-One GmbH in D-72636 Frickenhausen, enthalten ist. Während der Zentrifugation trifft das Blut auf das Trennmedium und die Zellen werden gemäß ihrer Dichte getrennt. Dabei spielt die Klappe eine besondere Rolle, indem nämlich nach dem Ende der Zentrifugation die gewünschte Zellfraktion im Blutabnahmeröhrchen, d.h. im Behälter 1, vorliegt. Die Klappe ist entsprechend der WO 00/46585 A derart ausgestaltet, daß sie sich während der Zentrifugation im Bereich der Wände des Behälters 1 öffnet, wie dies z.B. in der genannten WO-A dargestellt ist. Nach dieser Vorbereitung wird der Behälter 1 an die Vorrichtung 5 angeschlossen und die Zellfraktion in den Behälter 6, in dem wiederum z.B. ein Lyse- und/oder Konservierungspuffer in flüssiger Form vorliegen kann, überführt.

Da der Analysekit 22 werkseitig für ein 3bestimmtes Blutvolumen vorbereitet werden kann, ist es möglich, den Strömungskanal 38 in seiner Länge in Richtung der Längsmittelachse 41 so zu bemessen, daß, wenn ein Zentrifugationsschritt vorgeschaltet ist, der Endbereich des Strömungskanals 38 bis in eine vorbestimmbare Blutfraktion reicht und somit nur diese Fraktion in den Behälter 6 überführt wird.

Der Behälter 6, der z.B. als Reaktionsbehälter mit dem darin vorgelegten Reagens bzw. Reagenzgemisch 9 bezeichnet werden kann, kann derart ausgebildet sein, daß, wie Fig. 2 zeigt, ein Durchmesser des Halses an den Durchmesser des Anschlußbereiches 25 der Vorrichtung 5 angepaßt ist. Beispielsweise ist es möglich, daß die Vorrichtung 5 auf den Hals des Behälters 6 aufgeschraubt werden kann. Diese Schraubverbindung sollte dabei also nicht so fest sein, daß beim Abziehen des Behälters 1 verhindert wird, daß die Vorrichtung 5 mit diesem Behälter 1 gleichzeitig mitabgezogen wird. Dazu ist es beispielsweise möglich, den Anschlußbereich 25 für den Behälter 6 der Vorrichtung 5 aus einem elastisch verformbaren Werkstoff herzustellen.

Neben dieser Schraubverbindung ist es selbstverständlich möglich, auch andere Arten von Verbindungen, z.B. einfaches Aufstecken der Vorrichtung 5 und Herstellen eines Reibschlusses zwischen der äußeren Oberfläche des Halses des Behälters 6 und der inneren Oberfläche des Anschlußbereiches 25, d.h. des Zylinders 30 der Vorrichtung 5 herzustellen. Andere Anschlußmöglichkeiten, wie beispielsweise ein Lueranschluß, ein Bajonettanschluß, Rasteinrichtungen etc. sind selbstverständlich möglich. Wiederum unter der Premisse, daß die Kraft, die diese Anschlußeinrichtung auf den Hals des Behälters 6 ausübt, geringer ist als die Kraft, mit der der Behälter 1 im Anschlußbereich 26 der Vorrichtung 5 festgehalten wird.

Der Behälter 6 kann, je nach Bedarf, ein vorbestimmbares Volumen, z.B. 1, 2, 5, 10 ml etc., aufweisen, je nachdem, für welches Volumen der Analysekit 22 vorbereitet wird.
Zudem kann vorzugsweise der Behälter 6 evakuiert sein, so daß aus dem Behälter 1 ein bestimmtes Volumen an Urprobe 3 bzw. vorbehandelte Probe abgezogen wird.

Für gegen oxidative Medien besonders empfindliche Proben bzw. Probenbestandteile ist es möglich, den Behälter 6 mit einem Inertgas, z.B. Stickstoff, Argon, Helium oder dgl., zu befüllen.

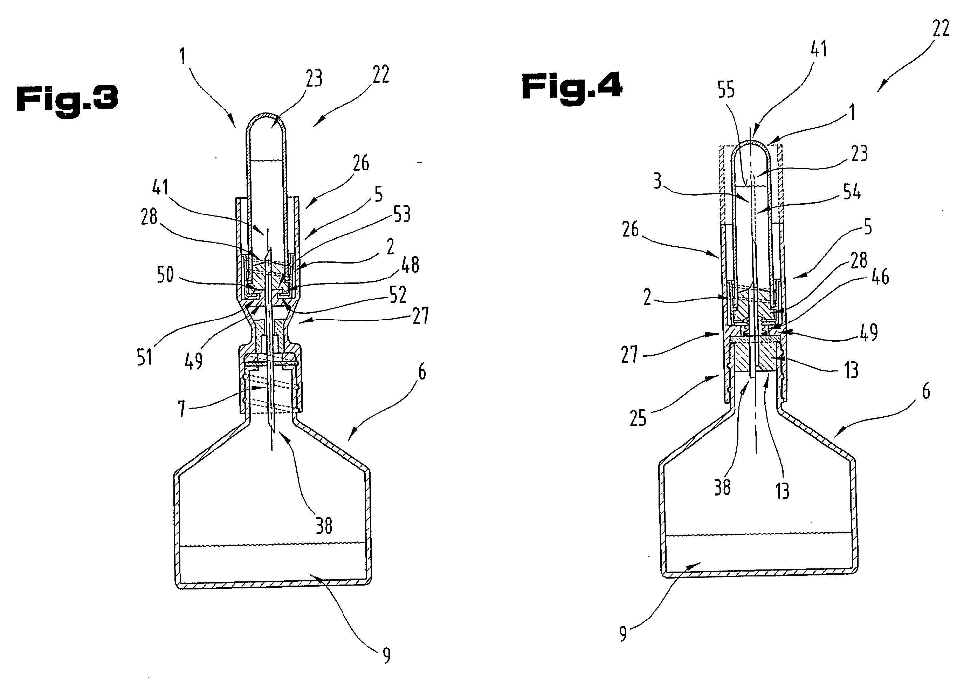

Fig. 3 zeigt eine Ausführungsvariante des Analysekits 22, bei der die Vorrichtung 5 zur Herstellung einer geschlossenen, luftdichten Strömungsverbindung zwischen dem Behälter 1 und dem Behälter 6, in dem wiederum ein Reagens bzw. ein Reagenzgemisch 9 vorgelegt sein kann, im wesentlichen der Ausführung nach Fig. 2 entspricht und können daher die dortigen Ausführungen entsprechend übertragen werden. Unterscheidendes Merkmal ist, daß nunmehr diese Vorrichtung 5 im Übergangsbereich zwischen dem Mittelbereich 27 und dem oberen Anschlußbereich 26 für den Behälter 1 ein anderes Halteelement 48 für den Behälter 1 aufweist.

Wie bereits zu Fig. 2 ausgeführt, ist der obere Anschlußbereich 26 für den Behälter 1 vom Mittelbereich 27 der Vorrichtung 5 über ein, vorzugsweise senkrecht auf die Längsmittelachse 41 stehendes Trennelement 49, welches vorzugsweise einstückig mit der Vorrichtung 5 ausgebildet ist, getrennt. Dieses Trennelement 49 weist, bevorzugt im Bereich der Längsmittelachse 41, eine Öffnung auf, durch welche der Strömungskanal 38 geführt ist.

Im Bereich der Längsmittelachse 41 setzt sich dieses Trennelement 49 fort, wobei ein auf den Behälter 1 weisender Trennelementendbereich 50 mit einem größeren Durchmesser ausgebildet ist, als ein darunterliegender, unmittelbar anschließender, in Richtung auf den Behälter 6 weisender Übergangsbereich 51 des Trennelementes 49. Dadurch wird eine Nut 52 ausgebildet, so daß die Schraubkappe 2, welche im auf das Trennelement 49 weisenden Endbereich 53 eine größere Ausnehmungen aufweist, um den Zugang zu dem unmittelbar darunterliegenden, d.h. in Richtung auf den Innenraum 23 des Behälters 1 weisenden Septum 28 für das Penetrationsmittel 7, in diesem Fall den Strömungskanal 38, zu ermöglichen. Ist nun dieser Endbereich 53 der Schraubkappe 2 elastisch ausgebildet, so ist es möglich, daß beim Aufschieben des Behälters 1 auf den Strömungskanal 38, d.h. beim Einschieben des Behälters 1 in den Anschlußbereich 26 der Vorrichtung 5, dieser Endbereich 53 zumindest teilweise in die ringförmige Nut 52 des Trennelementes 49 eingreift und in der Folge einrastet, so daß also der Behälter 1 in der Vorrichtung 5 fixiert ist. Dies ist insbesondere auch deswegen möglich, da Septen üblicherweise aus einem Gummi, z.B. Brombutylkautschuk, also einem elastischen Material gefertigt werden, so daß das Septum 28 des Behälters 1 während des Aufschiebens ebenfalls zurückweicht und das Einrasten ermöglicht wird. Obwohl auch bei dieser Ausführungsvariante die Verbindung zwischen der Vorrichtung 5 und dem Behälters 6, insbesondere von dessen Hals, über eine Schraubverbindung hergestellt wird, können selbstverständlich andere Verbindungsmethoden, wie bereits oben ausgeführt, angewandt werden.

Des weiteren sind sämtliche Ausführungen zur Ausführungsvariante nach Fig. 2 betreffend den Behälter 1 bzw. den Behälter 6, sowie weitere Details zur Vorrichtung 5 entsprechend übertragbar und sei an dieser Stelle bemerkt, daß dies selbstverständlich für sämtliche Ausführungsvarianten gilt, obwohl dies im folgenden nicht mehr explizit angesprochen wird.

Zudem sei erwähnt, daß die einzelnen Teile des Analysekits 22 innerhalb der diversen Ausführungsvarianten auswechselbar sind bzw. der Analysekit 22, wie dies anhand weiterer Ausführungsvarianten im folgenden dargestellt wird, erweiterbar ist.

Die Fig. 4 beschreibt eine Ausführungsvariante des Analysekits 22, bei dem die Vorrichtung 5 zur Verbindung der Behälter 1, 6 einen Druckausgleichskanal 54 aufweist. Dieser Druckausgleichskanal 54 dringt in diesem Fall bis über einen Flüssigkeitsspiegel 55 des auf dem "Kopf" stehenden Behälters 1 bzw. des Blutabnahmeröhrchens, welches sich im Anschlußbereich 26 der Vorrichtung 5 befindet, vor. Durch den Druckausgleichskanal 54 werden beim Durchfluß der Flüssigkeit von dem Behälter 1 in den Behälter 6 entsprechende Luftmengen aus dem Behälter 6 in den Behälter 1 transportiert. Es kommt dadurch zu einem Druckausgleich zwischen dem Behälter 6 und dem Behälter 1. Dadurch wird der Flüssigkeitstransport zwischen diesen beiden Behältern 1,6 verbesserst, der andernfalls durch einen im Innenraum 23 des Behälters 1 über einem Flüssigkeitsspiegel 55 entstehenden Unterdruck durch die ablaufende Flüssigkeit gegebenenfalls verhindert werden kann. Diese Ausführungsvariante wird insbesondere dann verwendet, wenn der Behälter 6, welcher die transferierte Flüssigkeit bzw. Urprobe 3 aufnimmt und indem wiederum ein Reagens bzw. Reagenzgemisch 9 vorgelegt sein kann, nicht evakuiert ist.

Wie aus Fig. 4 zu ersehen ist, kann die Vorrichtung 5 zur Verbindung der beiden Behälter 1 und 6 im Mittelbereich 27 zwischen den beiden Anschlußbereichen 25, 26 ohne oben beschriebene Querschnittsverengung ausgebildet sein, so daß also die Vorrichtung 5 äußerlich im wesentlichen zylinderförmig ist.
Weiters ist in Fig. 4 dargestellt, daß im Übergangsbereich 27 wiederum das besagte Trennelement 49 zur Trennung der beiden Anschlußbereiche 25, 26 sowie zur Halterung bzw. Führung des Strömungskanals 38 und/oder des Druckausgleichskanals 54 angeordnet ist und beispielsweise als Lochscheibe mit zumindest einer zentralen Öffnung, durch die der Strömungskanal 38 sowie der Druckausgleichskanal 54 geführt ist, ausgebildet ist, insbesondere einstükkig aus der Vorrichtung 5 gebildet ist.

Die zentrale Öffnung bzw. ein darunter liegender Hohlraum kann dabei in ihrem Volumen wiederum so bemessen sein, daß zumindest ein Teil der zurückgeschobenen Schutzkappe 46 in diesem Volumen aufgenommen wird. Die Schutzkappe 46 selbst kann in ihrer Länge vorteilhafterweise so bemessen sein, daß bei nicht aufgesetztem Behälter 1 diese Schutzkappe 46 auch den Druckausgleichskanal 54 umgibt. Das Trennelement 49 liegt weiters direkt an einer Außenoberfläche des Verschlusses des Behälters 6, z.B. des Septums 13, auf.

Die Halterung des Behälters 1 in der Vorrichtung 5, insbesondere im Anschlußbereich 26, wird bei dieser Ausführungsvariante rein über einen Reibschluß zwischen den entsprechenden Flächen der Vorrichtungen 5 bzw. des Behälters 1 bzw. der Schutzkappe 2 des Behälters 1 bewerkstelligt.

Wie weiters in Figur 4 strichliert angedeutet ist, kann die Länge des Druckausgleichskanals 54 in Richtung der Längsmittelachse 41 an das vorbestimmbare Volumen der Urprobe 3, welches vom Behälter 1 aufgenommen wird, angepaßt werden, so daß also jedenfalls der auf den Innenraum 23 in den Behälter 1 weisende Endbereich des Druckausgleichskanals über den Flüssigkeitsspiegel 55 hinausragt. In diesem Fall kann es gegebenenfalls erforderlich sein, auch die Vorrichtung 5 in Richtung der Längsmittelachse 41 zu verlängern, so daß bei nicht angeschlossenem Behälter 1 der Endbereich des Druckausgleichskanals 54 von der Wandung der Vorrichtung 5, d.h. der Wandung des Anschlußbereiches 26 in zur Längsmittelachse 41 paralleler Richtung abgedeckt und damit ein entsprechender Schutz für den Anwender erreicht wird.

In einer dazu sehr ähnlichen, nicht dargestellten Ausführungsvariante ist es möglich, daß der Strömungskanal 38 und der Druckausgleichskanal 54 konzentrisch zueinander angeordnet sind und beispielsweise der Druckausgleichskanal 54 zumindest teilweise durch den Strömungskanal 38 geführt wird, so daß für die zu transferierende Urprobe 3 ein im wesentlichen ringförmiger Spalt zur Verfügung steht.

Wie im Anschlußbereich 25 für den Behälter 6 in Fig. 4 dargestellt, wird der Behälter 6 bei der Ausführungsvariante nach Fig. 4 nicht über ein Schraubgewinde mit der Vorrichtung 5 verbunden, sondern über einzeln angeordnete Schnappverschlüsse. Wobei diese Schnappverschlüsse nicht über den gesamten Umfang des Halses des Behälters 6 verteilt angeordnet sein müssen, so daß bei einer leichten Drehung der Vorrichtung 5 der Eingriff dieses Schnappverschlusses aufgehoben wird und damit die Vorrichtung 5 zusammen mit dem Behälter 1 mit geringerem Kraftaufwand vom Behälter 6 abgezogen werden kann. Unterstützend ist hierbei, wenn die Vorrichtung 5 zumindest im Anschlußbereich 25 für den Behälter 6 aus einem elastischen Werkstoff gebildet ist, so daß also die Wandung des Anschlußbereiches 25 beim Abziehen der Vorrichtung 5 nachgibt und der Eingriff des Schnappverschlusses in diesem Bereich ebenfalls aufgehoben wird.

Sowohl der Strömungskanal 38 als auch der Druckausgleichskanal 54 können in beiden Endbereichen zur Penetration eines Behälterverschlusses, insbesondere der Septen 13, 28 der Behälter 6, 1, ausgebildet sein. Anderseits ist es möglich (in Fig. 4 nicht dargestellt), daß der Strömungskanal 38 und der Druckausgleichskanal 54 in einem Halteelement 48, welches als Stopfen ausgebildet ist, gehaltert werden. Dieses Halteelement 48 ist vorzugsweise dabei so bemessen, daß zwischen der Wandung der Vorrichtung 5 im Anschlußbereich 25 und dem Halteelement 48 ein ringförmiger Spalt entsteht, indem die Wandung des Halses des Behälters 6 zumindest teilweise aufgenommen wird.

Es ist bei dieser Ausführungsvariante somit möglich, den Behälter 6 z.B. mit einer Siegelfolie werkseitig zu verschließen und wird diese Siegelfolie beim Aufschieben der Vorrichtung 5 zerstört, wobei der Behälter 6 in weiterer Folge über das Halteelement 48 verschlossen wird. Beim Abziehen des Behälters 1 mit der Vorrichtung 5 vom Behälter 6 gleiten der Strömungskanal 38 und der Druckausgleichskanal 54 aus der Halterung im Halteelement 48, welches beispielsweise wiederum als Septum 13 ausgebildet sein kann, so daß dieses Halteelement 48 in der Folge einen dicht schließenden Stopfen für den Behälter 6 bildet. Damit kann für die Herstellung und Befüllung des Behälters 6 auf bereits bewährte Maschinen, beispielsweise aus der Pharmaindustrie, zurückgegriffen werden, mit welchen die Versiegelung des Behälters 6 bewerkstelligt wird.

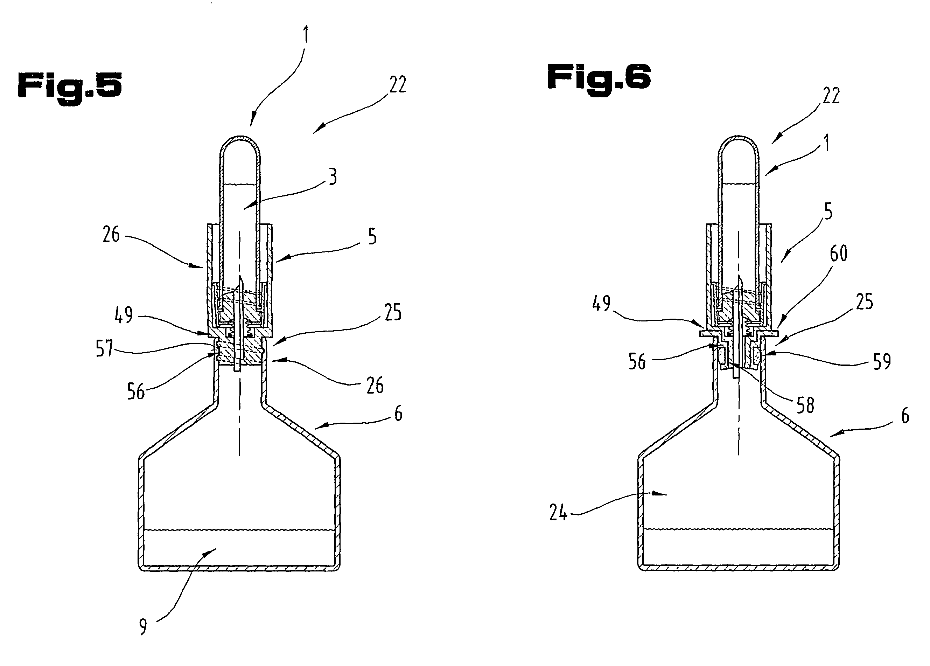

Fig. 5 zeigt eine Ausführungsvariante des Analysekits 22 bestehend aus dem Behälter 1, dem Behälter 6, sowie der Vorrichtung 5, mit der zwischen den Behältern 1, 6 eine luftdichte Strömungsverbindung in Form eines geschlossenen Systems hergestellt wird.

Bei dieser Ausführungsvariante ist der untere Anschlußbereich 25 für den Behälter 6 nicht als, wie in den anderen Ausführungsvarianten gezeigt, Zylindermantel 32 ausgebildet, sondern in Form eines Verschlußstopfens 56.

Der Verschlußstopfen 56 weist an einer äußeren Stopfenoberfläche 57 ein Außengewinde auf, welches in das Innengewinde im Halsbereich des Behälters 6 in Eingriff bringbar ist und damit die luftdichte Strömungsverbindung herstellbar ist.

Diese Ausführungsvariante des Analysekits 22 eignet sich insbesondere für Urproben 3, welche nicht oxidationsempfindlich sind, oder aber für Fälle, in denen im Behälter 6 ein Reagens bzw. ein Reagenzgemisch 9 vorgelegt ist, mit dem nach Reaktion mit der Urprobe 3 die Zielsubstanz bereits stabilisiert vorliegt. Weiters eignet sich diese Ausführungsvariante für eine Variante der erfindungsgemäßen Verfahrensweise, bei der nämlich die Vorrichtung 5 zuerst an den Behälter 6 angeschlossen wird und erst in der Folge der Behälter 1 in den Anschlußbereich 26 der Vorrichtung 5 eingeschoben wird und damit die Strömungsverbindung zwischen den beiden Behältern 1, 6 hergestellt wird. Nach dem Abziehen des Behälters 1 mit der Vorrichtung 5 vom Behälter 6 verbleibt letzterer offen.

Es ist jedoch auch bei dieser Ausführungsvariante möglich, einen Verschlußstopfen 56 trennbar an der Vorrichtung anzuordnen so daß dieser letztendlich beim Abziehen des Behälters 1 mit der Vorrichtung 5 am Behälter 1 verbleibt und diesen verschließt. Hierzu kann im Übergangsbereich zwischen dem Verschlußstopfen 56 und dem auch bei dieser Ausführungsvariante angeordneten Trennelement 49 zur Trennung der beiden Anschlußbereiche 25, 26 zumindest eine Sollbruchstelle angeordnet sein. Selbstverständlich kann auch bei dieser Ausführungsvariante der Behälter 6 zunächst z.B. mit einer Siegelfolie versiegelt vorliegen.

Eine zur Ausführungsvariante nach Fig. 5 sehr ähnliche Ausführungsvariante des Analysekits 22 ist in Fig. 6 dargestellt. Wiederum ist der Anschlußbereich 25 für den Behälter 6 der Vorrichtung 5 zur Verbindung des Behälters 1 mit dem Behälter 6 stopfenähnlich in Form des Verschlußstopfens 56 ausgebildet. Zur Abdichtung und damit zur Herstellung der luftdichten Strömungsverbindung ist im Verschlußstopfen 56 eine Ringnut 58 vorgesehen, in welcher ein Gummielement 59 als Dichtelement eingesetzt ist.

Weiters ist bei dieser Ausführungsvariante der Vorrichtung 5 das Trennelement 49 in Richtung auf den Innenraum 24 des Behälters 6 zylinderförmig verlaufend ausgebildet, wobei ein Durchmesser dieses zylinderförmigen Trennelementes 49 so bemessen ist, daß ein Spannelement 60, z.B. ein Spannring, bei angeschlossenem Behälter 6 zwischen einer inneren Oberfläche des Halses des Behälters 6 und dem Trennelement 49 in diesem Bereich angeordnet werden kann. Im Bereich der Berührungsoberflächen des Spannelementes 60 mit dem Trennelement 49 können diese konisch ausgeführt sein, wobei zwischen diesen beiden Bauteilen eine Schraubverbindung ausgebildet sein kann und es dadurch möglich wird, daß beim Eindrehen der Vorrichtung 5 in den Hals des Behälters 6 das Spannelement 60 gegen die Innenoberfläche des Halses des Behälters 6 vorgespannt wird und somit das Gummielement 49 dichtend ebenfalls gegen diese Oberfläche des Halses des Behälters 6 gedrückt wird. Das Spannelement 60 bildet hierbei die Ringnut 58 aus, in der das Gummielement 59 plaziert ist.

Für die Trennung des Behälters 6 von der Vorrichtung 5 ist es möglich, daß einerseits durch Verdrehen der Vorrichtung 5 oder aber durch das Herausziehen des Trennelementes 49 aus dem Eingriff mit dem Spannelement die Vorspannung im Gummielement 59 aufgehoben wird und damit der Behälter 1 zusammen mit der Vorrichtung 5 vom Behälter 6 abgezogen werden kann.

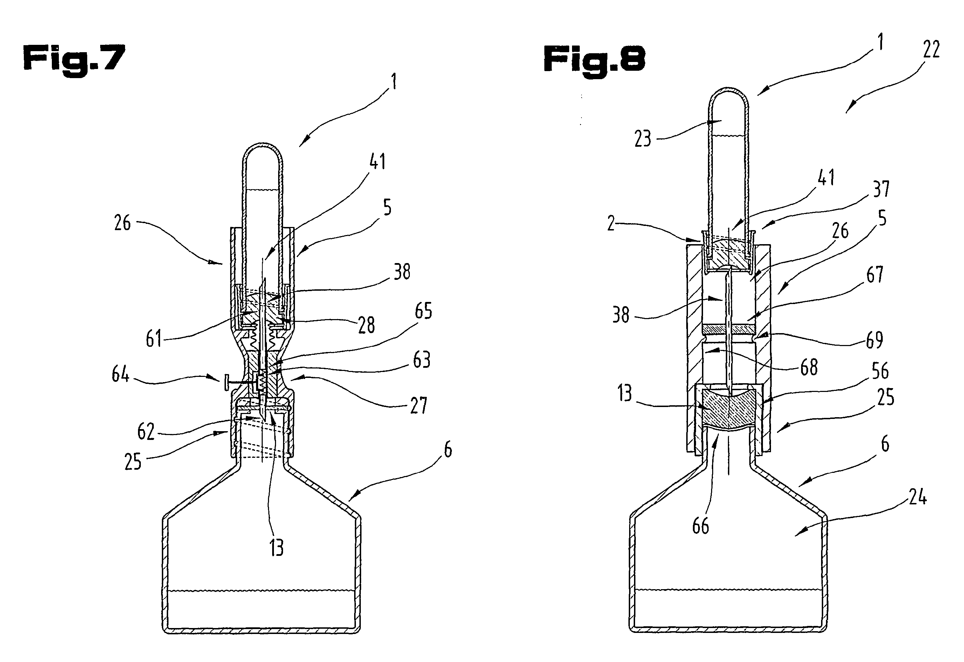

In Fig. 7 ist der Strömungskanal 38 der Vorrichtung 5 zweiteilig ausgebildet und ist in Richtung der Längsmittelachse 41 zwischen zwei Strömungskanalteilen 61, 62 ein Federelement 63 angeordnet. Dieses Federelement 63 kann derart ausgeführt sein, daß es eine Federkraft aufweist, die größer ist als die Kraft zur Penetration der Behälterverschlüsse bzw. der Septen 13, 28. Das Federelement 63 kann weiters über eine Arretiereinrichtung 64, welche z.B. im Mittelbereich 27 der Vorrichtung 5 durch deren Wandung zur Betätigung für den Anwender nach außen geführt sein kann, solange in einem vorgespannten Zustand gehalten werden, bis die beiden Behälter 1, 6 in die diesen zugeordneten Anschlußbereiche 25, 26 der Vorrichtung 5 eingeschoben sind. Durch das Lösen der Arretiereinrichtung 64 entspannt sich das Federelement 63 und wird dabei eine entsprechende Kraft auf die Strömungskanalteile 61, 62 übertragen, die in weiterer Folge die Behälterverschlüsse, insbesondere deren Septen 13, 28, gleichzeitig penetriert. Es ist dabei möglich, durch unterschiedliche Werkstoffwahl und/oder Baulänge in Richtung der Längsmittelachse 41 der beiden Septen 13, 18 ein entsprechendes Penetrationsverhalten der Vorrichtung 5, d.h. deren Strömungskanalteile 61, 62 zu erreichen und somit eine kurze Zeitverzögerung im Ablauf der Penetration der beiden Behälterverschlüsse zu erreichen.

Beide Strömungskanalteile 61, 62 sind im vorliegenden Beispiel zumindest im Bereich des Federelementes 63 in einem Führungselement 65 der Vorrichtung 5 verschiebbar gehaltert, wodurch eine Führung der beiden Strömungskanalteile 61, 62 ermöglicht wird.

Eine Ausführungsvariante der Vorrichtung 5 zur Verbindung des Behälters 1 mit dem Behälter 6 ist in der Ausführungsvariante des Analysekits 22 nach Fig. 8 dargestellt. Der Behälter 6 ist mit einem Verschlußelement 66 mit einer sehr geringen Wandstärke, wie beispielsweise einer Siegelfolie, verschlossen.

Die Vorrichtung 5 weist bei dieser Ausführungsvariante im Anschlußbereich 25 für den Behälter 6 einen in die Vorrichtung 5 eingesetzten Verschlußstopfen 56 auf, wobei dieser wiederum über ein Septum 13 verfügt.

Sowohl zwischen dem Verschlußstopfen 56 und der diesen umgebenden Wandung der Vorrichtung 5 als auch zwischen dem Verschlußstopfen 56 und dem Hals des Behälters 6, auf dem die Vorrichtung 5 aufgesetzt wird, wird ein Reibschluß ausgebildet, wodurch die Vorrichtung 5 und damit auch der Verschlußstopfen 56 fixiert wird. Anderseits ist es möglich, im Bereich der Berührungsfläche zwischen dem Verschlußstopfen 56 und der Außenwandung des Halses des Behälters 6, wie dies z.B. in Fig. 7 angedeutet ist, ein Verbindungselement, wie z.B. einen Schnappverschluß, auszubilden.

Durch das Aufschieben der Vorrichtung 5 auf den Hals des Behälters 6 wird mittels des in den Verschlußstopfen 56 eingesetzten Septums 13 das Verschlußelement 66 durchstoßen, so daß in weiterer Folge über den Strömungskanal 38 der Vorrichtung 5 nach Penetration des Septums 13 des Verschlußstopfens 56 die Strömungsverbindung zwischen den Innenräumen 23, 24 der Behälter 1, 6 hergestellt ist.

Nach erfolgtem Flüssigkeitstransfer wird der Behälter 1 zusammen mit der Vorrichtung 5 abgezogen, wobei der Verschlußstopfen 56 am Behälter 6 verbleibt und somit dieser dicht verschlossen für weitere Verfahrensschritte zur Verfügung steht.

Selbstverständlich sind bei dieser Ausführungsvariante der Vorrichtung 5 auch andere Verbindungsvorrichtungen, wie beispielsweise Bajonettverschlüsse etc., möglich. Es sollte jedoch dabei darauf geachtet werden, daß die Halterung des Verschlußstopfens 56 in der Vorrichtung 5 nicht derart fest ist, daß dieser nach Entfernung der Vorrichtung 5 vom Behälter 6 abgezogen wird.

Der Strömungskanal 38 ist bei der Ausführungsvariante nach Fig. 8 entlang der Längsmittelachse 41 verschiebbar in der Vorrichtung 5 gehaltert. Dazu kann der Strömungskanal 38 von einem Haltemittel 67, z.B. einer Lochplatte mit zentraler Durchführung des Strömungskanals 38, gehaltert sein. Vorzugsweise liegt dieses Haltemittel 67 in der Ausgangsposition auf einem zumindest bereichsweise an einem inneren Umfang 68 der Vorrichtung 5 angeordneten, ringförmigen, über die innere, auf den Strömungskanal 38 weisende Oberfläche der Vorrichtung 5 vorstehenden Vorsprung 69 auf, so daß in dieser Ausgangsposition das Septum 13 durch den Strömungskanal 38 nicht penetriert ist. Durch das Einschieben des Behälters 1 in den Anschlußbereich 26 der Vorrichtung 5 wird bei Kontakt der Schraubkappe 2 mit dem Haltemittel 67 letzteres über den Vorsprung 69 in Richtung auf den Innenraum 24 des Behälters 6 verschoben. Dazu kann das Haltemittel 67 aus einem elastischem Material gefertigt sein, so daß die Kraft für das Aufschieben bzw. die Verformung des Haltemittels 67 verringert sein kann. In weiterer Folge kann der Ringsteg 37 der Schraubkappe 2 ebenfalls über den Vorsprung 69 in Richtung auf den Innenraum 24 verschoben werden, so daß die Schraubkappe 2 zwischen dem Verschlußstopfen 56 und dem Vorsprung 69 einrastet und damit fixiert ist. Durch diese Fixierung wird beim Abziehen des Behälters 1 zugleich die Vorrichtung 5 zur Herstellung der Strömungsverbindung vom Behälter 6 mitabgezogen.

Es besteht bei dieser Ausführungsvariante wiederum die Möglichkeit, daß der Strömungskanal 38 in das Haltemittel 67 eingeschraubt ist bzw. ist es selbstverständlich möglich, daß das Halteelement 67 an dem Strömungskanal 38 angespritzt ist bzw. der Strömungskanal 38 mit dem Haltemittel 67 verklebt ist etc.

Nach einer geringfügigen Abwandlung der Ausführungsvariante des Analysekits 22 nach Fig. 8 kann der Verschlußstopfen 56 bereits am Behälter 6 angebracht sein, so daß in der Folge die Vorrichtung 5 über den Verschlußstopfen 56 aufgeschoben werden muß.

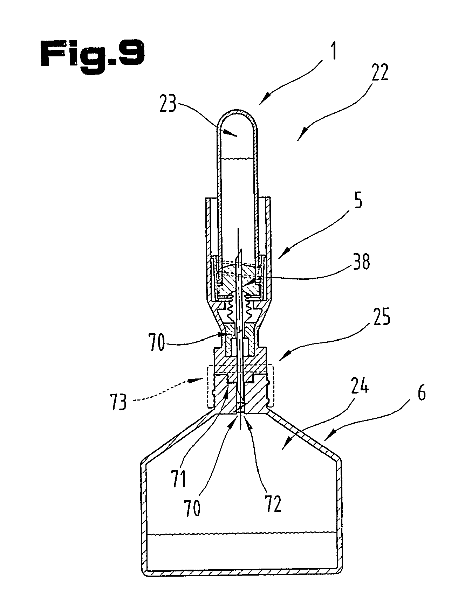

Fig. 9 zeigt eine Variante des Analysekits 22, bei der vorzugsweise im Hals des Behälters 6 ein Verschlußelement 70, z.B. ein Ventil, ein Hahn oder dgl., angeordnet ist. Die Vorrichtung 5 zur Verbindung des Innenraums 23 des Behälters 1 mit dem Innenraum 24 des Behälters 6 ist bei dieser Ausführungsvariante der Vorrichtung 5 im Anschlußbereich 25 für den Behälter 6 den Hals des Behälters 6 nicht übergreifend ausgebildet, sondern greift zumindest ein Teil der Vorrichtung 5, d.h. des Anschlußbereiches 25, in eine Vertiefung 71 im Hals des Behälters 6 ein. Zur Fixierung der Vorrichtung 5 am Hals des Behälters 6 kann in dieser Vertiefung beispielsweise eine Schnappeinrichtung, ein Schraubverschluß, ein Bajonettverschluß, ein Reibschluß etc. ausgebildet sein.

Der Strömungskanal 38 wird beim Aufsetzen der Vorrichtung 5 auf den Hals des Behälters 6 in eine vorzugsweise zentrale Durchgangsöffnung 72 im Hals des Behälters 6 eingeführt. Obwohl in Fig. 9 auch das dieser Durchgangsöffnung 72 zugewandte Ende des Strömungskanals 38 zur Penetration eines Septums ausgebildet ist, muß selbstverständlich bei dieser Ausführungsvariante eine derartige Ausbildung nicht zwingend erfolgen, da bei dieser Variante kein Septum am Behälter 6 durchstoßen werden muß. Es besteht jedoch die Möglichkeit, daß, wie dies in Fig. 9 strichliert angedeutet ist, das Verschlußelement 70 im Verlauf des Strömungskanals 38 in diesem angeordnet ist, so daß also die Anordnung eines Septums am Behälter 6 gegebenenfalls sinnvoll bzw. erforderlich ist. Für diesen Fall ist der Strömungskanal 38, wie in Fig. 9 dargestellt, beidseitig zur Penetration eines Septums ausgebildet.

Mit Hilfe des Verschlußelementes 70 ist es möglich, die Strömungsverbindung zwischen den Innenräumen 23, 24 der Behälter 1, 6 jederzeit zu unterbrechen. Es können also gezielt beliebige Volumina aus dem Behälter 1 in den Behälter 6 transferiert werden, bzw. ist es damit möglich, sollten im Behälter 6 Reaktionen stattfinden, das Verschlußelement 70 so einzustellen, daß beispielsweise eine langsame Zugabe, z.B. tropfenweise Zugabe, der Flüssigkeit aus dem Behälter 1 in den Behälter 6 erfolgt bzw. kann es vorteilhaft sein, die Strömungsverbindung zwischen diesen beiden Behältern solange zu unterbrechen, bis daß die bereits transferierte Flüssigkeit im Behälter 6 abreagiert ist. Das Verschlußelement 70 kann dabei wiederum einen verdrehbaren Kanal aufweisen, der in Strömungsverbindung mit dem Strömungskanal 38 verbringbar ist. Es ist dabei möglich, den Strömungskanal 38 zweiteilig auszuführen, wobei je ein Strömungskanalteil (in Fig. 9 nicht dargestellt) je einem der Behälter 1, 6 zugeordnet ist.

Bei der Ausbildung der Vorrichtung 5 mit einem weiteren Anschlußbereich für einen weiteren Behälter ist es möglich, dieses Verschlußelement beispielsweise als 3-Wege-Hahn auszubilden, so daß entweder wahlweise der Behälter 1 oder der weitere Behälter mit dem Behälter 6 strömungsverbunden ist, oder daß gleichzeitig alle drei Behälter miteinander über dieses Verschlußelement 70 kommunizieren.

Bei dieser Ausführungsvariante der Vorrichtung 5 zur Herstellung einer Strömungsverbindung zwischen mehreren Behältern kann sowohl der Behälter 1 als auch der Behälter 6 an einer inneren und äußeren Oberfläche eine Meßskala aufweisen, anhand derer zumindest eine Grobabschätzung des bereits vom Behälter 1 in den Behälter 6 transferierten Volumens ermöglicht ist. Selbstverständlich können aber auch bei sämtlichen weiteren Ausführungsvarianten derartige Meßskalen wahlweise an den Behältern angebracht werden.

Wie in Fig. 9 weiters in strichlierter Form dargestellt ist, ist es möglich, daß beispielsweise für den Transport der Hals des Behälters 6, insbesondere die Durchgangsöffnung 72, mit einer Verschlußkappe 73, z.B. mit einer Schraubkappe, gesichert ist.

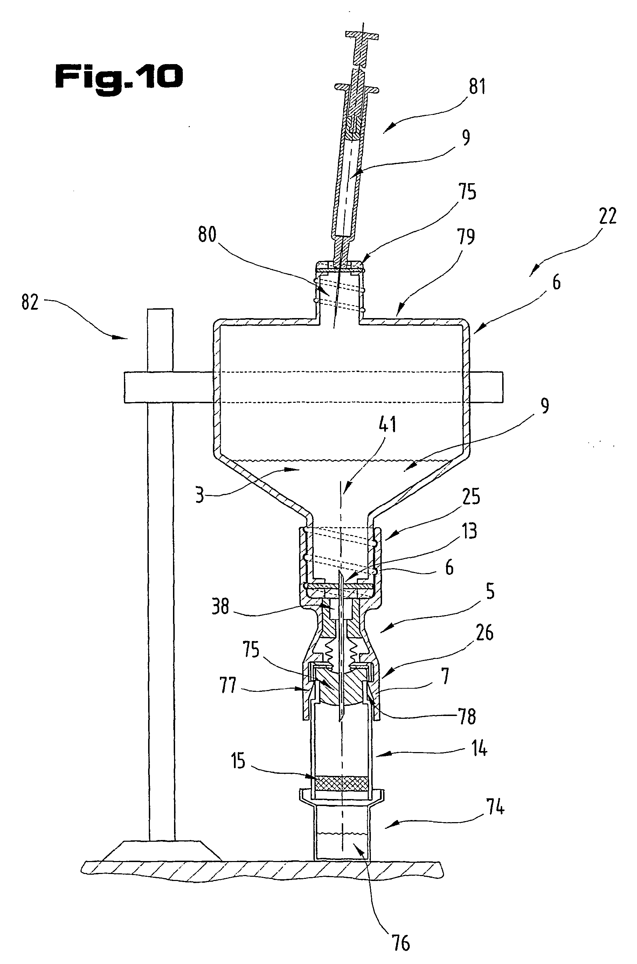

In Fig. 10 ist eine Ausführungsvariante des Analysekits 22 dargestellt, bei welcher dieser den Behälter 6, eine Vorrichtung 5 zur Herstellung einer Strömungsverbindung, die Aufreinigungsvorrichtung 14 mit darin angeordneter Matrix 15 sowie einen Auffangbehälter 74 umfaßt. Mit diesem Analysekit 22 können bereits vorbereitete Proben weiter bearbeitet werden und die Zielsubstanz an der Matrix 15 abgeschieden werden. Es sei jedoch an dieser Stelle bemerkt, daß die vorangehenden Ausführungsvarianten des Analysekits 22 mit den Elementen dieser Ausführungsvariante bzw. den weiteren noch zu beschreibenden Ausführungsvarianten kombiniert werden können.

Wie bereits erwähnt, ist die Aufreinigungsvorrichtung 14, z.B. die Aufreinigungssäule, vorzugsweise zylinderförmig mit offenen Endbereichen ausgeführt. Es ist daher nicht erforderlich, daß in zumindest einem der Endbereiche der Aufreinigungsvorrichtung 14 ein Septum 75 angeordnet ist, jedoch kann über dieses Septum 75 eine Fixierung bzw. Führung der Vorrichtung 5, insbesondere von deren Strömungskanal 38, ermöglicht werden. Es besteht aber die Möglichkeit, daß diese Aufreinigungsvorrichtung 14 in den Anschlußbereich 26 der Vorrichtung 5, der insbesondere zur Aufnahme des Behälters 1 aus den vorangegangenen Ausführungsbeispielen ausgebildet ist, eingeschoben wird und dort über verschiedenste Halteeinrichtungen bzw. Verbindungseinrichtungen, wie z.B. einen Schraubverschluß, einen Bajonettverschluß oder aber auch lediglich ein Reibschluß zwischen der Wandung der Aufreinigungsvorrichtung 14 und der Vorrichtung 5 gehaltert wird.

Der weitere Anschlußbereich 25 für den Behälter 6 ist insbesondere entsprechend den Ausführungsvarianten nach den Fig. 2 bis 9 ausgebildet.

Zur Verbindung des Auffangbehälters 74 mit dem diesem zugeordneten Endbereich der Aufreinigungsvorrichtung 14 bestehen ebenfalls bereits genannte Möglichkeiten, wie Schraubverschluß, Bajonettverschluß, Reibschluß, Rasteinrichtungen etc. Das Volumen dieses Auffangbehälters 74 ist derart bemessen, daß vorzugsweise der gesamte Inhalt des Behälters 6, welcher sich aus der überführten Urprobe 3, sowie dem im Behälter 6 vorgelegten Reagens bzw. Reagenzgemisch 9 bzw. dem Reaktionsgemisch daraus zusammensetzen kann, ausgebildet. Es besteht aber auch die Möglichkeit, insbesondere, da ein oder mehrere Waschschritte der auf der Matrix abgeschiedenen Zielsubstanz(en) erforderlich sein können, daß dieser Auffangbehälter 74 ein entsprechend größer dimensioniertes Volumen aufweist, so daß ein Auswechseln dieses Behälters 74 zwischen den einzelnen Verfahrensschritten nicht erforderlich ist.

Wie bereits zu Fig. 1 erwähnt, wird nach Entfernung des Behälters 1 mit der Vorrichtung 5 vom Behälter 6, in welchem die Urprobe 3 überführt wurde, dieser mit einer noch unbenutzten Vorrichtung 5 zur Herstellung einer Strömungsverbindung zwischen zwei Behältern versehen und an diese Aufreinigungsrichtung 14 angeschlossen.

Durch das Schwenken dieser so zusammengestellten Vorrichtung um 180°, so daß die Vorrichtung auf dem "Kopf" steht, läuft das im Behälter 6 enthaltene Flüssigkeitsgemisch über den Strömungskanal 38 und in der Folge die Matrix 15 der Aufreinigungsvorrichtung 14 in den Auffangbehälter 74 ab. Dabei wird die Zielsubstanz bzw. werden die Zielsubstanzen von der Matrix 15 zurückgehalten und somit von der Restflüssigkeit 76 abgetrennt.

Die Anordnung des Strömungskanals 38 hat sich dabei, aufgrund der Fragmentierung von beispielsweise Nukleinsäuremolekülen, als vorteilhaft erwiesen, wobei sich diese Fragmentierung aufgrund des geringen Durchmessers des Strömungskanals 38 erreichen läßt, der z.B. als Zwei-Wege-Nadel bzw. als Kanüle ausgebildet sein kann. Selbstverständlich kann, sofern eine derartige Fragmentierung nicht erforderlich ist, auf den Strömungskanal 38 verzichtet werden, so daß also die Verbindung zwischen der Aufreinigungseinrichtung 14 und dem Behälter 6 im wesentlichen durch eine zumindest annähernd zylinderförmige Vorrichtung 5 zur Herstellung der Strömungsverbindung bewerkstelligt werden kann.

Von Vorteil ist es jedoch, wenn die Vorrichtung 5 zur Herstellung der Strömungsverbindung gleichartig zu den in Fig. 2 bis 9 beschriebenen Vorrichtungen 5 ausgebildet ist, d.h. daß mit dieser Vorrichtung 5 einerseits die Strömungsverbindung zwischen den beiden Behältern 1, 6, als auch die Strömungsverbindung zwischen dem Behälter 6 und der Aufreinigungsvorrichtung 14 hergestellt werden kann. Es läßt sich damit eine entsprechend vereinfachte Herstellung der Vorrichtung 5 ermöglichen und ist insbesondere auch der Analysekit 22 universeller einsetzbar.

Bei gegenständlicher Ausführungsvariante der Vorrichtung 5 zur Herstellung der Strömungsverbindung ist im Anschlußbereich 26 für die Aufreinigungsvorrichtung 14 ein insbesondere lösbarer Schnappverschluß vorgesehen, wobei ein über die innere Oberfläche der Vorrichtung 5 im Anschlußbereich 26 vorspringender, insbesondere ringförmiger Vorsprung 77 in eine entsprechende Ausnehmung 78 in der Wandung der Aufreinigungseinrichtung 14 im Bereich der Verbindung mit der Vorrichtung 5 eingreift. Diese Ausnehmung 78 kann beispielsweise durch eine Querschnittsverminderung der Aufreinigungsvorrichtung 14 in diesem Bereich erreicht werden.

Wie Fig. 10 weiters darstellt, kann der Behälter 6 insbesondere an einem in Richtung der Längsmittelachse 41 dem Hals des Behälters 6 gegenüberliegenden Bodenbereich 79, der dem Behälter 6 in den Ausführungsvarianten des Analysekits 22 nach den voranstehenden Figuren als Aufstandsfläche dient, eine weitere Behälteröffnung 80 z.B. in Form eines Halses, gegebenenfalls verschlossen mit einem weiteren Septum 75, aufweisen. Es ist dadurch möglich, an diese Behälteröffnung 80 z.B. einen weiteren Behälter anzuschließen, um z.B. eine Waschflüssigkeit über den Behälter 6 der Aufreinigungseinrichtung 14 zuzuführen, um beispielsweise verbliebene Reste der Probenflüssigkeit im Behälter 6 mit der Waschflüssigkeit herauszuwaschen.

In Fig. 10 wird dies durch die dort stellvertretend dargestellte Spritze 81 angedeutet, mit der selbstverständlich auch, insbesondere wenn die Behälteröffnung mit dem Septum 75 verschlossen ist, weitere Reagenzien 9 zugeführt werden können.

Umgekehrt besteht dabei aber auch die Möglichkeit, vordefinierbare Volumina über diese zusätzliche Behälteröffnung, z.B. zur Qualitätskontrolle, einer vorangehenden Reaktion im Behälter 6 aus diesem abzuziehen.

Obwohl in Fig. 10 der Analysekit 22 von einer Haltevorrichtung 82, z.B. einem Stativ, gehaltert wird, kann dieser Analysekit 22 auch in ein Zentrifugationsgefäß, wie dies zu Fig. 1 ausgeführt wurde, eingebracht werden, wobei in diesem Fall auf den Auffangbehälter 74 verzichtet werden kann, da dieser durch das Zentrifugationsgefäß gebildet wird.

Der Transfer der Probenflüssigkeit über die Matrix 15 in den Auffangbehälter 74 kann einerseits, wie bereits erwähnt, durch Zentrifugation erfolgen, andererseits ist es aber möglich, auf die Flüssigkeit diverse Kräfte auszuüben, beispielsweise Druckkräfte.

Sofern der Behälter 6 mit dem Septum 13 versehen ist, beispielweise der Behälter 6 an der vorangehenden Reaktionsstufe, z.B. aus dem Analysekit 22 nach den Fig. 2 bis 9, stammt, kann eine Vorrichtung 5 zur Herstellung einer Strömungsverbindung verwendet werden, welche einen Strömungskanal 38 aufweist, der nur an einem Ende eine Einrichtung zur Penetration des Septums 13 aufweist bzw. diese ausbildet.

Die Matrix 15 kann so beschaffen sein, daß Nukleinsäuren oder auch Proteine daran binden. Dazu besteht die Möglichkeit, diese aus einem Silikat in Art einer Filterscheibe zu fertigen.

Selbstverständlich besteht die Möglichkeit, daß anstelle der Matrix 15 weitere Mittel zur Abscheidung bzw. Abtrennung von zumindest einer Zielsubstanz aus der Probenflüssigkeit angeordnet werden. Diese Mittel können z.B. auch eine Flüssigkeit umfassen oder aber auch in Form einer Chromatographiesäule ausgebildet sein, so daß beispielsweise mehrere Zielsubstanzen nacheinander eluiert werden können.

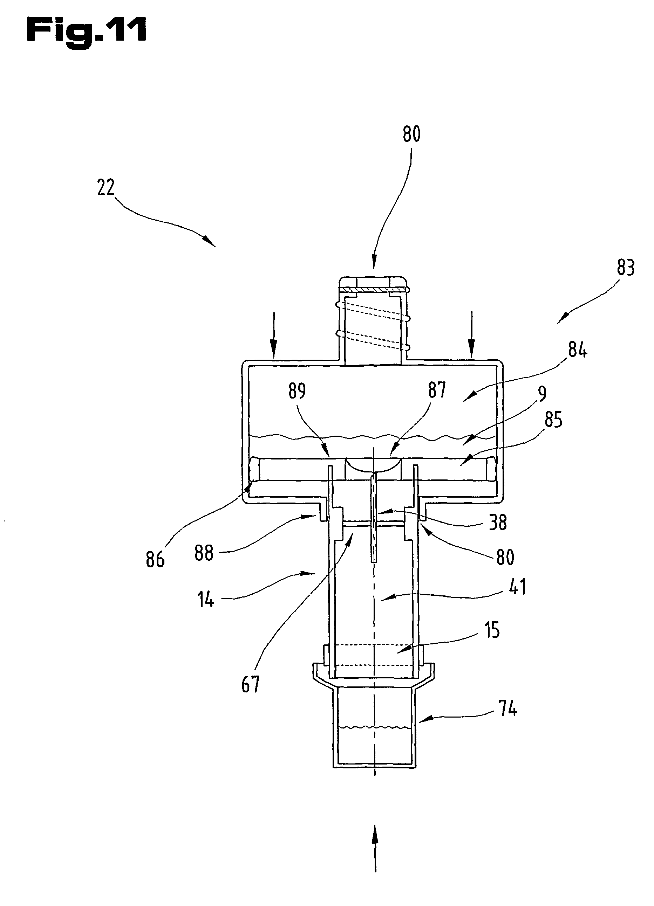

In Fig. 11 ist ein Behälter 83 dargestellt, der im Analysekit 22 verwendbar ist. Der Behälter 83 weist wiederum zwei entlang der Längsmittelachse 41 einander gegenüberliegende Behälteröffnungen 80 auf. In eine der beiden Behälteröffnungen 80 ist die Aufreinigungsvorrichtung 14 eingeschoben. In dem dieser Behälteröffnungen 80, entlang der Längsmittelachse 41 gegenüberliegenden Endbereich der Aufreinigungsvorrichtung 14 kann wiederum ein Auffangbehälter 74 angeordnet sein.

In einem Innenraum 84 des Behälters 83 ist ein entlang der Längsmittelachse 41 verschiebbarer Kolben 85 angeordnet, der insbesondere in Richtung senkrecht auf der Längsmittelachse gegenüber der Innenwandung des Behälters 83 mittels eines Dichtelementes 86 dichtend anliegend ausgebildet ist. Damit wird erreicht, daß bei einer Verschiebung des Kolbens 85 entlang der Längsmittelachse 41 ein sich unterhalb in Richtung auf die Aufreinigungsvorrichtung 14 weisendes, sich ausbildendes Teilvolumen des Behälters 83 nicht mit der über dem Kolben 85 anstehenden Probenflüssigkeit füllt.

Im Kolben 85 ist vorzugsweise zentrisch ein selbstverschließenden Septum 87 angeordnet, welches von dem darunter angeordneten Strömungskanal 38 penetrierbar ist.

Die Aufreinigungsvorrichtung 14 ist zylinderförmig ausgebildet und wird in einem ringförmigen Steg 88, der am Behälter 84 im Bereich der Öffnung 80 zur Aufnahme der Aufreinigungsvorrichtung 14 ausgebildet ist, geführt. Dadurch wird eine Relativbewegung des Behälters 84 gegen die Aufreinigungsvorrichtung 14 ermöglicht.

In einer Ausgangsstellung ist der Kolben 85 im Bereich der Öffnung 80 für die Aufreinigungsvorrichtung 14 plaziert.

Zur Herstellung der Strömungsverbindung wird die Aufreinigungsvorrichtung 14 in einen Ringspalt 89, der im Kolben 85 im Bereich der dem Innenraum 84 zugewandten Endfläche der Aufreinigungsvorrichtung 14 ausgebildet ist, eingeschoben, wobei der Strömungskanal 38 das Septum 87 penetriert und somit die Strömungsverbindung zum Innenraum 83 herstellt. In weiterer Folge kann dieser Kolben 85 weiter in Richtung der der Aufreinigungsvorrichtung 14 gegenüberliegenden Behälteröffnung 80 verschoben werden, wobei auf eine im Innenraum 84 des Behälters 83 vorliegende Probenflüssigkeit ein entsprechender Druck ausgeübt und diese durch den Strömungskanal 38 in die Aufreinigungsvorrichtung 14 zur Abtrennung der Zielsubstanz(en) an der Matrix 15 abgeleitet wird.

Der Strömungskanal 38 ist dabei bewegungsfest über das Haltemittel 67 im oberen, der Öffnung 80 des Behälters 84 zugewandten Endbereich der Reinigungsvorrichtung 14 in dessen Innenraum gehaltert.

Über die zweite Öffnung 80 kann wiederum ein weiteres Reagens bzw. Reagenzgemisch 9 im Innenraum 84 des Behälters 83 zugeführt werden. Es besteht weiters die Möglichkeit, daß, sofern dies nicht erforderlich bzw. erwünscht ist, der Behälter 84 über lediglich eine Behälteröffnung 80 zum Anschluß der Aufreinigungsvorrichtung 14 verfügt.

Es ist weiters möglich, die Aufreinigungsvorrichtung 14 mit dem Kolben 85 des Behälters 83 über eine Sollbruchstelle zu verbinden, welche bei Druckausübung auf den Behälter 83 bzw. die Aufreinigungsvorrichtung 14 bricht und somit die Penetration des Septums 87 des Kolbens 85 durch die Relativbewegung bewirkt.

Es ist bei dieser Ausführungsvariante möglich, insbesondere bei Probenflüssigkeiten, bei denen allein aufgrund der Gewichtskraft ein Flüssigkeitstransfer stattfindet, gezielt vorbestimmbare Flüssigkeitsmengen in die Aufreinigungsvorrichtung 14 durch entsprechende Druckausübung abzuleiten. Dadurch wird es möglich, das Volumen der Aufreinigungsvorrichtung 14 zu verkleinern und die Probenflüssigkeit portionsweise über diese Aufreinigungsvorrichtung 14 abzuleiten.

Es ist weiters möglich, den Kolben 85 spitz bzw. beckenartig in Richtung auf die Längsmittelachse 41 zulaufend auszubilden, um beispielsweise eine zumindest annähernd vollständige Entleerung des Behälters 83 zu ermöglichen.

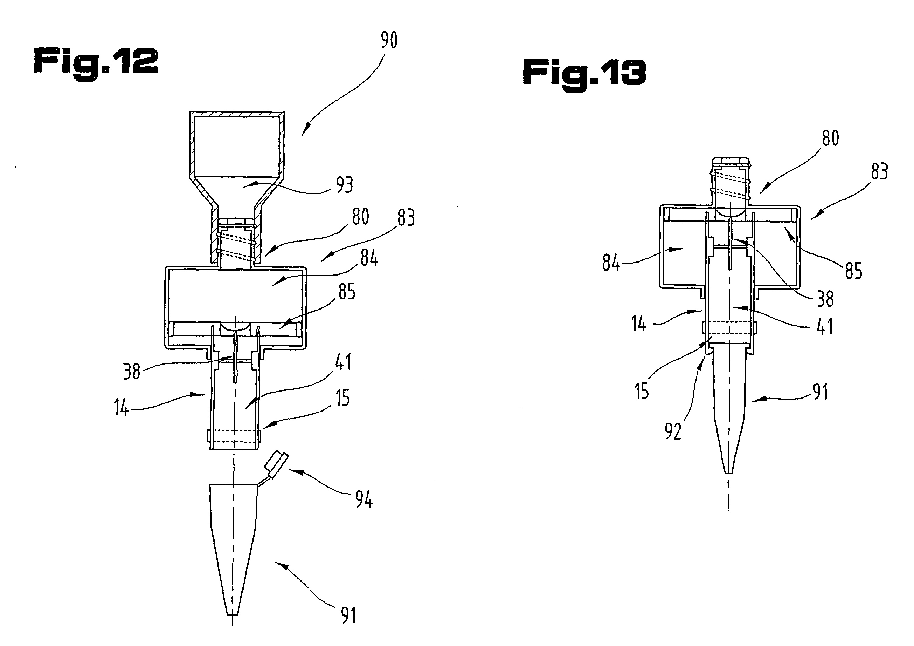

In Weiterführung dieser Ausführungsvariante des Analysekits 22 nach Fig. 11 zeigen die Fig. 12 und 13 Ausführungensvarianten bzw. Weiterentwicklungen, bei denen an der zweiten Behälteröffnung 80, welche an der Längsmittelachse 41 der Aufreinigungsvorrichtung 14 gegenüberliegend am Behälter 83 angeordnet ist, ein Waschflüssigkeitsbehälter 90 angeschlossen, z.B. am Behälter 83 aufgeschraubt ist. Selbstverständlich kann auch hierbei wiederum zur Herstellung der Strömungsverbindung zwischen dem Waschflüssigkeitsbehälter 90 und dem Behälter 83 eine in den Fig. 12 und 13 nicht dargestellte Vorrichtung 5 zur Verbindung von zwei Behältern insbesondere mit dem zur Penetration von Septen ausgebildeten Strömungskanal 83 verwendet werden.

Der Auffangbehälter 74 ist bei diesen Weiterbildungen durch ein Zentrifugationsgefäß 91 ersetzt, welches beispielsweise auf die Aufreinigungsvorrichtung 14 aufgeschoben werden kann (Fig. 12) bzw. diese mit Hilfe eines ringförmigen Steges 92 in diese eingeklipst werden kann (Fig. 13). Es ist bei diesen Ausführungsvarianten möglich, daß der Kolben 85 des Behälters 83 wieder in seine Ausgangsstellung zurückgezogen wird, wodurch im Innenraum 84 ein entsprechender Unterdruck erzeugt wird und somit eine Waschflüssigkeit 93 in diesen Innenraum 84 eingesaugt wird. In der Folge kann, nachdem die Strömungsverbindung zum Waschflüssigkeitsbehälter 90 unterbrochen wurde, z.B. durch Abziehen des Waschflüssigkeitsbehälters 90 vom Behälter 83 oder mit Hilfe eines voranstehend beschriebenen Verschlußelementes 70, die Waschflüssigkeit 93 durch die gegenläufige Bewegung des Kolbens 85 über den Strömungskanal 38 in die Aufreinigungsvorrichtung 14 verbracht und über die Matrix 15 geleitet werden.

Anstelle des Waschflüssigkeitsbehälters 90 können selbstverständlich andere Behälter, wie z.B. Behälter mit Eluierungsflüssigkeiten, an diese obere Behälteröffnung 80 mit oder ohne die Vorrichtung 5 angeschlossen werden, so daß also innerhalb eines geschlossenen Systems letztendlich die Zielsubstanz(en) von der Matrix eluiert und in das Zentrifugationsgefäß 91 überführt wird.

Zur weiteren Aufbewahrung der eluierten Zielsubstanz(en) kann das Zentrifugationsgefäß 91, wie in Fig. 12 gezeigt, mit einer Verschlußkappe 94 versehen sein.

Anstelle des Septums 87 im Kolben 85 ist es selbstverständlich möglich, andere Verschlußelemente, z.B. Klappenventile, zu verwenden, wobei in diesem Fall der Strömungskanal 38 nicht zur Penetration eines Septums ausgebildet sein muß, sondern lediglich die Öffnung diese Klappenventils durch die Relativbewegung des Behälters 84 gegen die Aufreinigungsvorrichtung 14 bewirken muß.

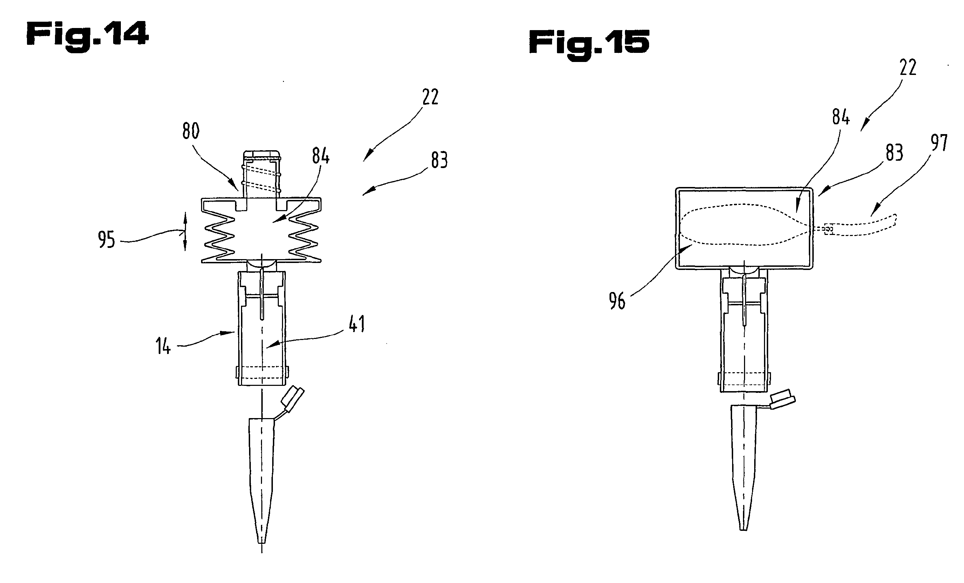

Fig. 14 zeigt eine Ausführungsvariante des Analysekits 22, bei der der Behälter 83 aus einem elastisch verformbaren Werkstoff gefertigt ist, so daß, wie durch einen Doppelpfeil 95 in Fig. 14 angedeutet, dieser Behälter 83 in Richtung der Längsmittelachse 41 in Art eines Balges zusammenpreßbar ist. Damit wird in der Folge auf den Innenraum 84 des Behälters 83, d.h. auf die in diesem Innenraum vorgelegte Probenflüssigkeit durch die Volumenverminderung eine entsprechende Druckkraft ausgeübt, wodurch die Ableitung derselben in die Aufreinigungsvorrichtung 14 erleichtert werden kann.

Auch bei dieser Ausführungsvariante ist es nicht zwingend erforderlich, daß der Behälter 83 über eine zweite Behälteröffnung 80, welcher der Aufreinigungsvorrichtung 14 gegenüberliegend am Behälter 83 angeordnet ist, verfügt.

In Fig. 15 ist eine Ausführungsvariante des Analysekits 22 der Fig. 11 dargestellt, wobei im Behälter 83 eine Membran 96 angeordnet ist, welche mit einer außerhalb des Behälters 83 angeordneten Versorgungsleitung 97 für ein insbesondere gasförmiges Fluid in Verbindung steht. Es wird damit wiederum möglich, das Volumen des Innenraums 84 des Behälters 83 zu verringern, indem nämlich die Membran ballonartig ausgebildet ist und diese Membran aufgeblasen wird. Durch abwechselndes Aufblasen und Entleeren der Membran können im Behälter 83 Druckwechsel erzeugt werden, so daß durch Volumenverringerung und -vergrößerung und die damit bewirkten Druckwechsel eine Art Pumpbewegung zur Überführung der im Behälter 83 vorgelegten Probenflüssigkeit möglich wird. Andererseits ist es auch möglich, die Membran 96 vor Befüllung des Behälters 83 aufzublasen und danach zu entleeren, wodurch eine Flüssigkeit, welche z.B. über eine nicht dargestellte weitere Behälteröffnung 80 zugeführt wird, in den Innenraum 84 des Behälters 83 eingesaugt wird.

Zum Trennen der Membran 96 von der Versorgungsleitung 97 kann selbstverständlich eine Ventilanordnung vorgesehen sein.

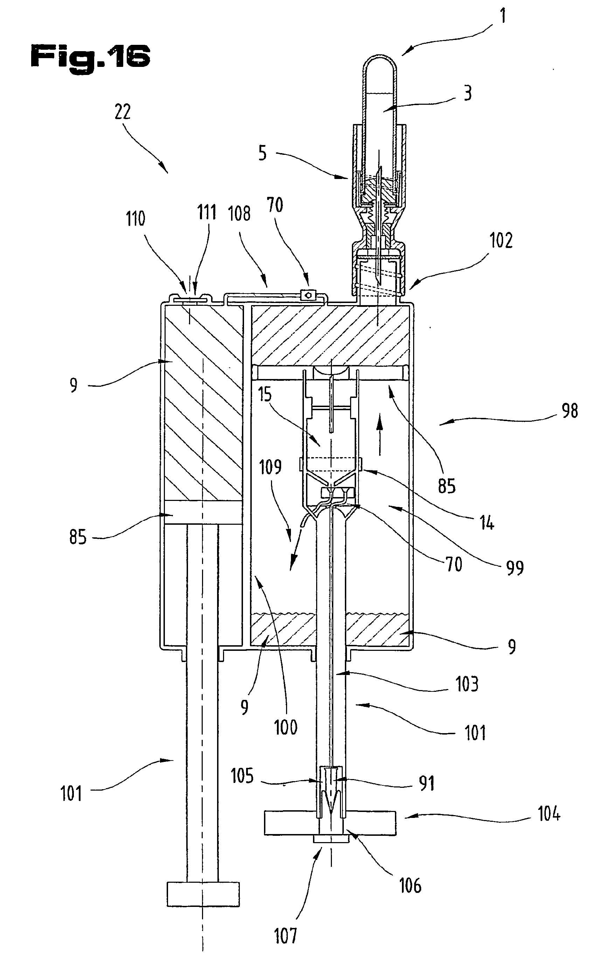

In Fig. 16 ist ein Behälter 98 gezeigt, der in seinem Innenraum 99 eine Trennwand 100 aufweist. Der Behälter 98 wird damit in Teilvolumina unterteilt, wodurch es möglich wird, innerhalb dieser Teilvolumina verschiedenste Reagenzien bzw. Reagenzgemische 9 vorzulegen und ein Teilvolumina als Reaktionszone vorzusehen. In letzterer kann wiederum der Kolben 85 mit angeschlossener Aufreinigungsvorrichtung 14 angeordnet sein, die einen Teil einer Kolbenstange 101 bildet.

An der Wandung des Behälters 98, welche dieses für die Reaktion reservierte Teilvolumen umgibt, kann, insbesondere im oberen Bereich, beispielsweise in der Abdeckung des Behälters 98, eine Behälteröffnung 102 vorgesehen sein, an der eine Vorrichtung 5 zur Herstellung einer Strömungsverbindung zwischen Behältern anschließbar ist und somit eine Strömungsverbindung zu dem Behälter 1 mit der Urprobe 3 hergestellt und diese in den Reaktionsbereich des Behälters 98 verbracht werden kann. In diesem Reaktionsbereich kann, wie bereits erwähnt, ein Lysepuffer vorgesehen sein, wodurch Nukleinsäuren aus den Zellen freigesetzt werden. In der Aufreinigungsvorrichtung 14 ist wiederum die Matrix 15 angeordnet.

Des weiteren ist es möglich, daß die Kolbenstange 101 mit einem Kanal 103 im Inneren versehen ist, der sich von der Aufreinigungsvorrichtung 14 bis zu einer Handhabe 104 in dem der Aufreinigungsvorrichtung 14 gegenüberliegenden Endbereich der Kolbenstange 101 erstrekken kann. Im Bereich dieser Handhabe 104 ist es möglich, diesen Kanal 103 im Querschnitt zur vergrößern, so daß eine Kammer 105 entsteht, welche zur Aufnahme des Zentrifugationsgefäßes 91 verwendet werden kann. Der Kanal 103 mündet in diesem Fall in die Öffnung des Zentrifugationsgefäßes 91.

Zur Halterung des Zentrifugationsgefäßes 91 kann in der Handhabe 104 eine Kammer 106 vorgesehen sein, welche ein Halteelement 107 für das Zentrifugationsgefäß 91, z.B. einen Stoppel, aufnehmen kann.

Die Teilvolumina können mit einem Verbindungskanal 108 strömungsverbunden sein, wobei in diesem Verbindungskanal 108 ein bereits ausgeführtes Verschlußelement 70 zur Unterbindung der Strömungsverbindung zwischen den Teilvolumina angeordnet sein kann.

Selbstverständlich ist es möglich, daß die Trennwand 100 sich nicht über eine gesamte Behälterhöhe des Behälters 98 erstreckt, so daß also ein Übertritt von Flüssigkeiten über die Trennwand zwischen den Teilvolumina möglich ist.

Zwischen der Kolbenstange 101 und der Aufreinigungsvorrichtung 14 kann ein von außerhalb des Behälters 98 betätigbares Stell- bzw. Verschlußelement 70 angeordnet sein, um wahlweise, je nach Stellung, eine Strömungsverbindung zum Kanal 103 oder zum Volumen des Reaktionsbereiches unterhalb des Kolbens 85 herzustellen.

Bei dieser Ausführungsvariante des Analysekits 22 bzw. des Behälters 98 wird in einem ersten Verfahrensschritt die Urprobe 3 in das für die Reaktion reservierte Teilvolumen des Behälters 98 überführt. Nach erfolgter Reaktion, beispielsweise Freisetzung von Nukleinsäuren, wird die Kolbenstange in Richtung auf den Innenraum 99 des Behälters 98 verbracht, wodurch das oberhalb des Kolbens 85 sich befindende Volumen des Innenraums 99 des Behälters 98 verkleinert und damit die Probenflüssigkeit in die Aufreinigungsvorrichtung 14 abgeleitet wird. Das Verschlußelement 70 der Aufreinigungsvorrichtung 14 befindet sich dabei in einer Stellung, in der die überschüssige Flüssigkeit in das durch das Hinaufschieben des Kolbens 85 entstehende Volumen unter dem Kolben 85, entsprechend Pfeil 109, abgeleitet wird. Nach erfolgter Überleitung und Bindung der Zielsubstanz(en) an der Matrix 15 kann der Kolben 85 zumindest bereichsweise wiederum in Richtung seiner Ausgangstellung zurückverbracht werden. Daraufhin wird aus einem zweiten Teilvolumen, welches ebenfalls mit einem Kolben 85 mit Kolbenstange 101 ausgerüstet ist, ein in diesem Teilvolumen befindliches Reagens 9, z.B. eine Waschflüssigkeit oder eine Eluierungsflüssigkeit, durch Verringerung des Volumens des Teilvolumens über den Verbindungskanal 108 in den Reaktionsbereich verbracht und über die Matrix 15 geleitet. Hierbei ist je nachdem, ob eine Wasch- oder Eluierungsflüssigkeit verwendet wird, das Verschlußelement 70 der Aufreinigungsvorrichtung 14 in Strömungsverbindung mit dem Kanal 103 zur Ableitung des Eluats in das Zentrifugationsgefäß 91 oder in Strömungsverbindung mit dem Innenraum 99 des Behälters 98 im Bereich der Reaktionszone.

Es kann also damit in einem geschlossenen System, an welches unterschiedlichste Behälter 1 über die Vorrichtung 5 anschließbar sind, praktisch die gesamte Probenvorbereitung für die Analyse der Zielsubstanz(en) durchgeführt werden.

Für den Fall, daß in das Teilvolumen mit der Wasch- bzw. Eluierungsflüssigkeit noch ein weiteres Reagens verbracht werden muß bzw. die jeweilige Flüssigkeit vom Volumen her gering bemessen war, kann dieses Teilvolumen über eine mit einem Septum 110 versehene Behälteröffnung 111 verfügen.

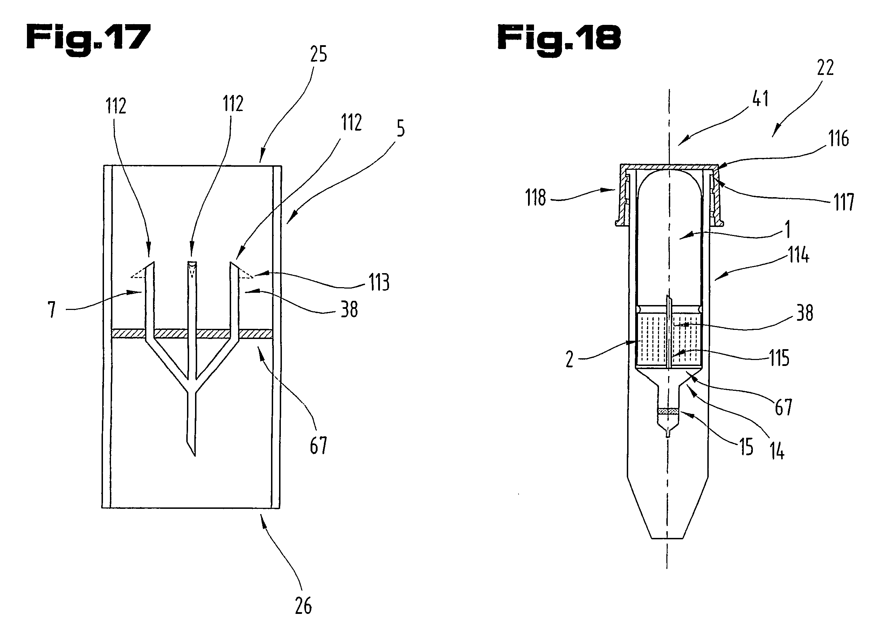

Fig. 17 zeigt eine Variante der Vorrichtung 5 zur Herstellung einer Strömungsverbindung zwischen mehren Behältern. Diese Vorrichtung 5 kann wiederum zylinderförmig ausgebildet sein mit zwei einander gegenüberliegenden Anschlußbereichen 25, 26 für die Behälter.

Zum Unterschied zu den bisher beschriebenen Strömungskanälen 38 ist bei dieser Ausführungsvariante der Strömungskanal 38 mit mehreren Teilströmungskanälen 112 in zumindest einem der Anschlußbereiche 25, 26 ausgebildet. Diese Teilströmungskanäle 112 können, wie in Fig. 17 dargestellt, zu einem einzigen Strömungskanal 38 im zweiten Anschlußbereich 26 zusammengefaßt werden. Selbstverständlich besteht die Möglichkeit, daß diese Teilströmungskanäle 112 jeweils separat im zweiten Anschlußbereich 26 weitergeführt werden.

Der Strömungskanal 38 bzw. die Teilströmungskanäle 112 sind auch bei dieser Ausführungsvariante über das Haltemittel 67 in der Vorrichtung 5 gehaltert.

Durch die mehrfache Penetration wird einerseits ein rascherer Ablauf der in diesem Anschlußbereich 25 aus dem Behälter 1 (Fig. 17 nicht dargestellt) abfließenden Probenflüssigkeit und andererseits wird damit auch eine größere Haltekraft des Septums des Behälters 1, welches nunmehr von mehreren Penetrationsmitteln 7 penetriert wird, erreicht. Zusätzlich kann, wie in Fig. 17 dargestellt, im Bereich der Penetrationsmittel 7 eine Rückhalteeinrichtung 113, z.B. in Widerhakenform, an den Strömungskanal 38 bzw. den Teilströmungskanälen 112 angeordnet sein, wodurch nach erfolgter Penetration des Septums 28 des Behälters 1 (in Fig. 17 nicht dargestellt) dem Abziehen des Behälters 1 von der Vorrichtung 5 ein größerer Widerstand entgegengesetzt wird.

Selbstverständlich können diese Rückhalteeinrichtungen 113 auch bei den anderen Ausführungsvarianten der Strömungskanäle angeordnet werden.

Fig. 18 zeigt eine Ausführungsvariante des Analysekits 22, welcher für die Abtrennung der Zielsubstanz(en) mittels Zentrifugalkraft ausgebildet ist. Dazu ist in einem Zentrifugationsgefäß 114 eine Aufreinigungsvorrichtung 14 mit eingesetzter Matrix 15 eingesetzt, wobei diese Aufreinigungsvorrichtung 14 über einen Strömungskanal 38 verfügt, welcher zur Penetration eines Behälterverschlusses 115 ausgebildet ist. Der Behälter 1 bzw. 6 ist in die Aufreinigungsvorrichtung 14 mit der Schraubkappe 2 auf die Matrix 15 weisend eingesetzt, so daß das nicht dargestellte Septum des Behälters 1, 6 vom Strömungskanal 38 penetriert ist.

Zur Halterung der Aufreinigungsvorrichtung 14 kann diese in einem der Matrix 15 gegenüberliegenden Endbereich einen ringförmigen Steg 116, der sich in Richtung senkrecht zur Längsmittelachse 41 von dieser weg erstreckt, auf einem gleichgestalteten Steg 117 des Zentrifugationsgefäßes 114 aufliegen.

Wahlweise kann das Zentrifugationsgefäß 114 noch mit einer Verschlußeinrichtung, z.B. mit einer Schraubkappe 118, verschlossen sein.

Während der Zentrifugation wird, wie bereits ausgeführt, die Probenflüssigkeit aus dem Behälter 1, 6 über die Matrix 15 der Aufreinigungsvorrichtung 14 in das Zentrifugationsgefäß 114 abgeleitet.

Der Strömungskanal 38 kann z.B. über ein in Draufsicht gesehenes sternförmiges Haltemittel 67 in der Aufreinigungsvorrichtung 14 gehaltert sein.

Bei sämtlichen Ausführungsvarianten ist es möglich, daß im Mittelbereich 27 zwischen den beiden Anschlußbereichen 25, 26 der Vorrichtung 5 zur Herstellung einer Strömungsverbindung zwischen mehreren Behältern der Strömungskanal 38 mit Hilfe einer oder mehrerer Arretiervorrichtungen in einer Ausgangsposition gehaltert ist. Erst nach Entriegelung dieser Arretiervorrichtung kann in der Folge der Strömungskanal 38 in Richtung der Längsmittelachse verschoben werden, so daß die Penetration der Septen 13, 28 ermöglicht wird. Diese Entriegelung kann z.B. dadurch erfolgen, daß der Behälter 1 in den Anschlußbereich 25 der Vorrichtung 5 eingeschoben wird und bei Kontakt mit dem Strömungskanal 38 und/oder dem Haltemittel 77 die Arretierung aufhebt.

Weiters ist es möglich, daß in zumindest einem der beiden Anschlußbereiche 25, 26 für die Behälter 1, 6 ein zusätzliches Dichtelement, z.B. ein Dichtring, angeordnet ist, um neben der Verbesserung der Dichtheit auch eine Erhöhung der Haltekraft, mit der der Behälter 1, 6 in diesen Anschlußbereich 25, 26 gehalten wird, durch Reibungskraft zu erhöhen.

Es ist auch möglich, die Vorrichtung 5 zur Herstellung einer Strömungsverbindung zwischen mehreren Behältern zweiteilig auszuführen, wobei diese beiden Teile über eine trennbare Verbindung miteinander verbunden sein können. Diese trennbare Verbindung kann, z.B. als Schraubverbindung, Bajonettverbindung, reibschlüssige Verbindung oder dgl., ausgebildet sein.

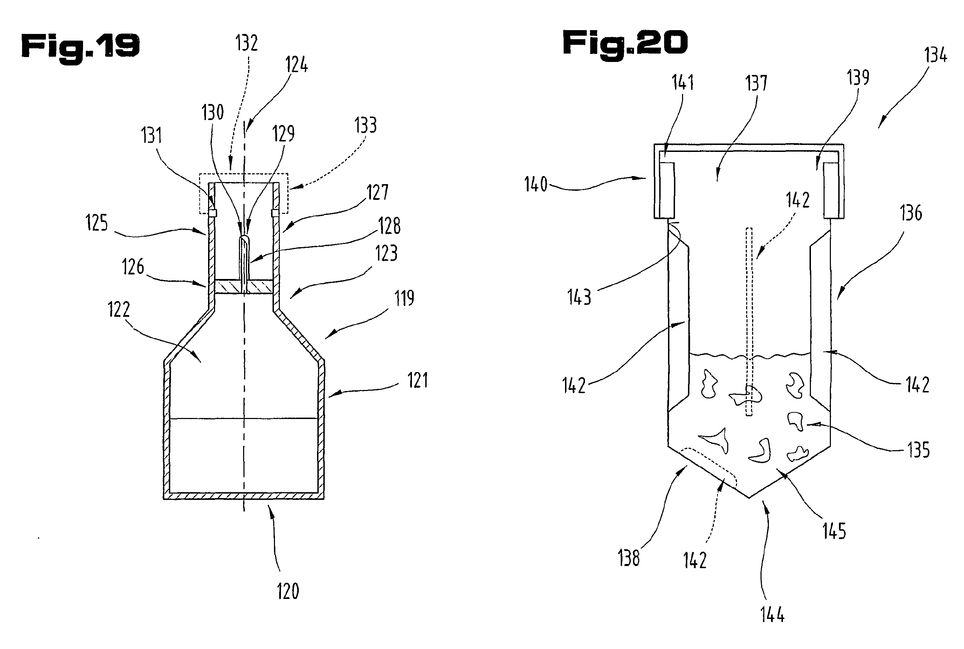

Es ist auch möglich, wie dies in Fig. 19 dargestellt ist, daß ein Behälter 119 mit einem Behälterboden 120 und einem Behältermantel 121, welche zumindest teilweise einen Innenraum 122 umgeben und der Behältermantel 121 eine Einlaßöffnung 123 aufweist, die bevorzugt dem Behälterboden 120 in Richtung einer Behälterlängsmittelachse 124 gegenüberliegend angeordnet ist, im Bereich der Einlaßöffnung 123 eine Vorrichtung 125 zur Herstellung einer geschlossenen, luftdichten Verbindung mit einem weiteren Behälter aufweist. Diese Vorrichtung 125 kann dabei wiederum ein Haltemittel 126 aufweisen, die an einem insbesondere zylinderförmigen Vorrichtungsmantel 127 fixiert bzw. einstückig mit diesem ausgebildet ist. Das Haltemittel 126 dient zur Halterung eines Strömungskanals 128, der wiederum von einer Schutzkappe 129 aus einem elastischen, selbstverschließenden Material abgedeckt ist und ein Penetrationsmittel 130 aufweisen kann. Vorzugsweise ist eine Länge des Vorrichtungsmantels in Richtung der Längsmittelachse 124 so bemessen, daß der Strömungskanal 128 mit dem Penetrationsmittel 130 von diesem Vorrichtungsmantel 127 seitlich abgedeckt ist.

Im Verlauf des Vorrichtungsmantels 127 kann über eine innere Oberfläche dieses Vorrichtungsmantels 127 in Richtung auf die Längsmittelachse 124 vorragend, zumindest ein Halteelement 131, z.B. eine Rasteinrichtung etc., angeordnet sein.

Darüber hinaus kann, wie in Fig. 19 strichliert dargestellt, ein Anschlußbereich 132 von einer Verschlußeinrichtung 133, z.B. einer Kappe, beispielsweise einer Schraubkappe, verschlossen sein.

Der weitere anschließbare Behälter kann bei dieser Ausführungsvariante lösbar mit der Vorrichtung 125 verbunden werden, z.B. über einen Schraubverschluß, einen Bajonettverschluß oder dgl.

Generell ist an dieser Stelle zu bemerken, daß der Behälter 119 und/oder die Vorrichtung 125 zur Herstellung der Strömungsverbindung mit einem weiteren Behälter zumindest teilweise, entsprechend obigen Ausführungen zu den verschiedenen Ausführungsvarianten der Vorrichtung 5 zur Herstellung einer Strömungsverbindung zwischen mehreren Behältern bzw. diesen Behältern 1, 6 ausgebildet sein, wobei aus leicht verständlichen Gründen ein zweiter Anschlußbereich der Vorrichtung 125 nicht vorhanden ist.

So ist es möglich, daß im Behälterboden 120 und/oder im Behältermantel 121 zumindest eine weitere Einlaßöffnung 123 mit einer Vorrichtung 125 angeordnet ist bzw. diese Öffnung 123 durch die Vorrichtung 125 gebildet ist.

Ebenso ist es möglich, daß der Behälterboden 120 und/oder der Behältermantel 121 elastisch verformbar ausgebildet sind, um das Volumen des Behälters 119 zum Druckauf- oder -abbau entsprechend beeinflussen zu können.

Möglich ist es auch, daß der Behälterboden 120 als flüssigkeitsdicht schließender Kolben ausgebildet ist, um hier wiederum eine Volumenverminderung zu erreichen. Ebenso können natürlich in diesem Behälter 119 diverse Reagenzien bzw. Reagenzgemische, z.B. Lysepuffer, Eluierungsflüssigkeiten oder dgl., wie dies bereits oben ausgeführt wurde, vorgelegt sein.

Darüber hinaus ist es möglich, im Innenraum 122 zumindest eine Trennwand anzuordnen, um diesen Innenraum 122 in mehrere Teilvolumina zu unterteilen. Die Ausführungen zu Fig. 17 können hierzu entsprechend übertragen werden.

Der Kolben kann in zumindest einer seiner Endlagen arretierbar ausgebildet sein. Ebenso ist es möglich, diverse Verschlußelemente 70, wie z.B. Ventile, Hähne oder dgl., anzuordnen, um Strömungsverbindungen, z.B. zwischen dem weiteren, an den Behälter 119 anschließbaren Behälter oder zwischen die Teilvolumina im Innenraum 122 zu unterbrechen.

Zumindest eine weitere Öffnung, die mit einem Septum verschlossen ist, kann im Behälterboden 120 und/oder im Behältermantel 121 angeordnet sein.

Ebenso kann im Innenraum 122 zumindest eine Membran, z.B. ein Luftbalg, angeordnet sein.

Der Strömungskanal 128 kann wiederum, z.B. als Hohlnadel, mit einem Penetrationsmittel 138 ausgebildet sein.

Auch der Hohlraum zur Aufnahme zumindest eines Teils der Schutzkappe 129 kann in der Vorrichtung 125 ausgebildet sein.

Die Rasteinrichtung kann als zumindest eine Vertiefung bzw. Ausnehmung in der Innenoberfläche der Vorrichtung 125 bzw. gegenüber dieser vorspringend ausgebildet sein.

Weiters kann der Innenraum 122 evakuiert sein, wobei der Unterdruck so bemessen sein kann, daß ein bestimmtes Flüssigkeitsvolumen aus dem an die Vorrichtung 125 anschließbaren Behälter in den Behälter 119 gesaugt wird.

Sind weitere Vorrichtungen 125 am Behältermantel 121 und/oder Behälterboden 120 ausgebildet bzw. angeordnet, können selbstverständlich auch hier Verschlußelemente zur Unterbrechung der Strömungsverbindung angeordnet werden.

Schließlich ist es auch möglich, neben oder im Strömungskanal 128 einen Druckausgleichskanal, wie oben beschrieben, vorzusehen.

Bei sämtlichen bisher beschriebenen Ausführungsvarianten besteht die Möglichkeit, die Verbindung zwischen der Vorrichtung 5, 125 zur Herstellung der Strömungsverbindung zwischen den Behältern über andere als bisher beschriebene Mittel zu bewerkstelligen. So ist es z.B. möglich, mit Hilfe von magnetischen bzw. magnetisierbaren Materialien, beispielsweise ferromagnetischen Metallen, die einzelnen Teile miteinander zu koppeln.

Es ist zudem möglich, für den Fall, daß Behälter verwendet werden, die ein größeres Volumen an Reagens bzw. Reagenzgemisch 9 umfassen, als für einen Verfahrensschritt benötigt wird, diese Behälter mit einer Portioniereinrichtung zu versehen. Diese kann z.B. in Form eines auf diese Behälter aufgesetzten Zylinders ausgebildet sein, wobei eine Kugel im Behälter angeordnet wird, die einen Verbindungskanal zum Zylinder verschließt und diesen erst wieder freigibt, wenn der Behälter um beispielsweise 180° gedreht wird. Selbstverständlich sind andere Portioniereinrichtungen möglich.

Sämtliche Teile der einzelnen Vorrichtungen können aus Kunststoff gefertigt sein bzw. ist auch ein Materialmix, z.B. Kunststoff/Metall, möglich.

Wie bereits erwähnt, ist es vorteilhaft, für die Abtrennung von Nukleinsäuren den Durchmesser des Strömungskanals 38, 128 über Fragmentierung der Nukleinsäuren mit einem bestimmten Durchmesser auszubilden.

Der Analysekit 22 kann weiters einen Behälter zur Probenentnahme, z.B. obiges Blutprobenröhrchen, umfassen. In diesem können dabei bereits erwähnte Reagenzien 9, z.B. ein Lysepuffer, ein Konservierungspuffer, Gemische daraus, vorgelegt sein.

In Fig. 20 ist eine Vorrichtung 134 zur Zerkleinerung einer Probe biologischen Ursprungs 135 dargestellt. Diese Vorrichtung 134 umfaßt einen Behälter 136 mit einem Innenraum 137, der zumindest teilweise von einem Behältermantel 138 begrenzt ist. Eine Behälteröffnung 139 ist mit einem Behälterverschluß 140, z.B. in Form einer Schraubkappe mit einem Gewinde 141, verschlossen.

Im Innenraum 137 ist zumindest eine Zerkleinerungseinrichtung 142, z.B. ein Messer, vorzugsweise mehrere, angeordnet, insbesondere an einer inneren Manteloberfläche 143 des Behältermantels 138 bzw. eines Behälterbodens 144 befestigt.

Diese Zerkleinerungseinrichtung 142 kann mit dem Behältermantel 138 und/oder Behälterboden 144 z.B. verklebt sein oder aber an diese angeformt sein, beispielsweise bereits während der Herstellung des Behälters 136 in das Werkzeug eingelegt werden und z.B. angespritzt werden.

Andererseits ist es möglich, diese Zerkleinerungseinrichtung 142 z.B. aus Kunststoff zu fertigen, insbesondere einstückig mit dem Behälter 136.

Der Behälter 136 ist in Form eines Zentrifugationsgefäßes, bevorzugt in Standardgröße, ausgebildet und kann auf einen Vortexierer aufgesetzt werden. Durch die bevorzugt hochtourige Bewegung, die mittels Vortexierer auf den Behälter 136 übertragen wird, wird die Probe 135 an den feststehenden Zerkleinerungseinrichtungen 142 vorbeibewegt und hierbei entsprechend zerkleinert, um in einer im Innenraum 137 wahlweise vorgelegten Flüssigkeit 145, z.B. einem Reagens bzw. Reagenzgemisch homogenisiert zu werden. Die Flüssigkeit 145 kann z.B. als Lyse und/oder Konservierungspuffer ausgebildet sein, wie bereits weiter oben beschrieben. Andere Flüssigkeiten, wie z.B. alkoholische Lösungen etc., oder aber auch destilliertes Wasser können ebenso vorgelegt werden.

Es ist weiters möglich, daß der Behälterverschluß 140 in Form eines Septums wahlweise in einer Schraubkappe gehaltert ausgebildet ist, so daß die homogenisierte Probe z.B. mit der Vorrichtung 5, 125 (siehe Fig. 2 bzw. 19) zur Herstellung einer Strömungsverbindung zwischen Behältern in einen weiteren Behälter transferiert werden kann. So ist es z.B. möglich, daß die Flüssigkeit 145 ein Lysepuffer ist und die Proben 135 eine Gewebeprobe sind. Während der Zerkleinerung der Gewebeprobe bzw. auch von Zellen werden Nukleinsäuren bzw. Proteine freigesetzt und können diese sofort lysiert bzw. konserviert werden. In der Folge können diese Nukleinsäuren, wie bereits erwähnt, über die Vorrichtung 5, 125 einer Aufreinigungsvorrichtung, wie bereits beschrieben, zugeführt und in dieser die Nukleinsäuren abgetrennt werden.

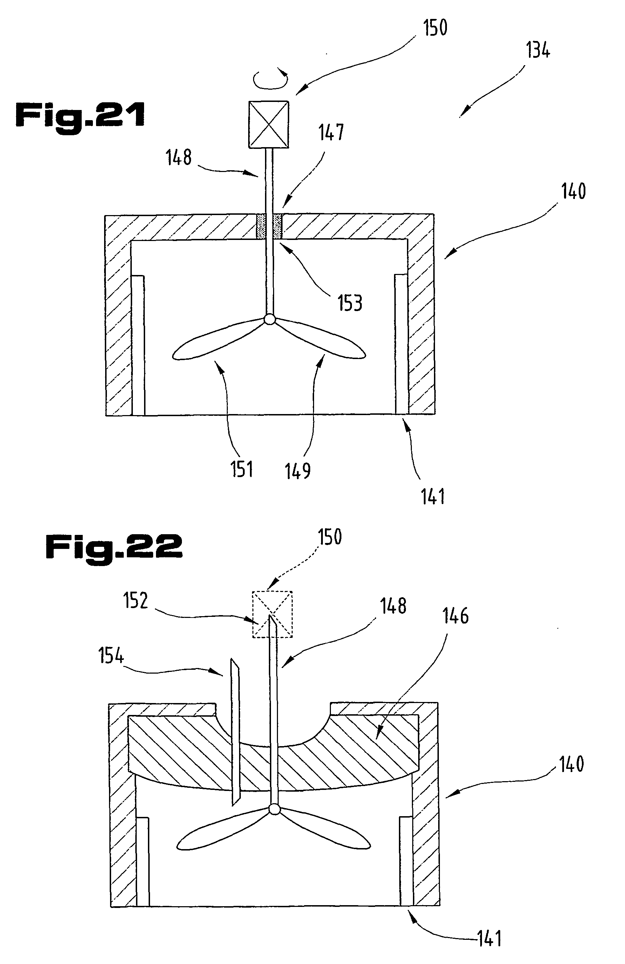

Alternativ bzw. ergänzend dazu zeigen die Fig. 21 und 22 Ausführungsvarianten der Vorrichtung 134 zur Zerkleinerung einer Probe biologischen Ursprungs, bei denen diese Vorrichtung in Form des Behälterverschlusses 140 als Schraubkappe mit Gewinde 141 (Fig. 21) bzw. als Schraubkappe mit Gewinde 141 und einem Septum 146 ausgebildet sind (Fig. 22). Bei der ersten Ausführungsvariante nach Fig. 21 dieser Vorrichtung 134 ist im Behälterverschluß 140 vorzugsweise zentral eine Behälterverschlußöffnung 147 angeordnet, durch welche eine Antriebswelle 148 für ein bewegliches Messerwerk 149 geführt und mit einer Antriebseinrichtung 150 für das Messerwerk 149, z.B. einem Motor, verbunden ist. Durch die Drehbewegung des Messerwerkes 149 und die auf dieses wirkende Fliehkraft werden Messer 151 aus ihrer Ruheposition in eine zumindest annähernd horizontale Stellung verbracht.

Bei der Ausführungsvariante nach Fig. 22 ist die Antriebswelle 148 mit einem Penetrationsmittel 152 versehen, welches beispielsweise in Form eines spitz zulaufenden nadelförmigen Rohres ausgebildet sein kann. Es wird dadurch möglich, für den Behälterverschluß 140 auf eine bereits bekannte Schraubkappe mit Septum 146 zurückzugreifen, wobei die Antriebswelle 148 dieses Septum 146 penetrieren kann, beispielsweise vom Anwender eingesetzt werden kann und an die in Fig. 22 strichliert dargestellte Antriebseinrichtung 150 angeschlossen werden kann. Dadurch wird es möglich, die Vorrichtung 140 in Modulbauweise anzubieten, wobei die Antriebswelle 148 mit dem Messerwerk 149 wiederverwendbar ausgebildet sein kann, beispielsweise aus Metall und sterilisierbar.

Selbstverständlich ist diese Ausbildung auch bei der Vorrichtung 140 nach Fig. 21 möglich. In diesem Falle ist die Antriebswelle 148 mit einem Dichtelement 153 in den Behälterverschluß 140 eingesetzt. Da jedoch dieses Einsetzen eine gewisse Praxis voraussetzt, insbesondere deswegen, da die Vorrichtungen 134 nach den Fig. 21 und 22 auf den Kopf stehend, d.h. also mit dem Behälterverschluß 140 nach unten weisend, da natürlich die in einem mit der Vorrichtung 134 verbundenen Behälter befindlichen Probe in den Bereich der Messerwerke 149 gelangen muß, verwendet werden, ist eine absolute Flüssigkeitsdichtheit erforderlich, um gegebenenfalls ein Austreten von infektiösem Material aus der Vorrichtung 134 bzw. des daran angeschlossenen Behälters zu verhindern.

Bei der Ausführungsvariante nach Fig. 22 kann entweder die Antriebswelle 148 als Strömungskanal verwendet werden, insbesondere wenn diese Antriebswelle 148 als Hohlnadel ausgebildet ist.

Andererseits besteht die Möglichkeit, daß ein eigener Strömungskanal 154 das Septum 146 zur Ableitung der homogenisierten und zerkleinerten Probe in dieser Probenflüssigkeit verwendet wird bzw. ist es möglich, die Strömungsverbindung, wie bereits erwähnt, über die Vorrichtung 5, 125 zu einem weiteren Behälter herzustellen.

Von Vorteil ist bei dieser Vorrichtung 134, daß aufgrund der geringen Abmessungen - wie bereits erwähnt, können im wesentlichen Standardgrößen von Gefäßen, beispielsweise von Zentrifugengefäßen verwendet werden - direkt am Ort der Gewebeentnahme, z.B. im Operationssaal, aber selbstverständlich auch in einem weiterverarbeitenden Labor, die Homogenisierung und damit Stabilisierung von z.B. Nukleinsäuren oder Proteinen erfolgen kann.

Die Antriebseinrichtung 150 ist bevorzugt mit verstellbarer Drehzahl ausgebildet und es ist damit möglich, das Messerwerk 149 hochtourig zu rotieren.

Der wahlweise im Behälter bzw. in der Vorrichtung 134 vorgelegte Lysepuffer kann sowohl in fester als auch in flüssiger Form vorgelegt werden und es sei hierzu auf obige Ausführungen verwiesen. Durch die direkte Anwendbarkeit dieser Vorrichtung 134 am Ort der Gewebeentnahme ist es möglich, Nukleinsäuren sofort zu stabilisieren und vor der Degradation durch endogene bzw. exogene RNA zu schützen.

Es wird mit der Vorrichtung 134 zur Zerkleinerung und/oder Homogenisierung von Proben biologischen Ursprungs, wie Geweben, wiederum ein einfaches Handhaben dieser Vorrichtungen in der molekularen Diagnostik ermöglicht und gleichzeitig durch das Ermöglichen eines geschlossenen Systems zwischen Behältern die Minimierung möglicher Kontaminationsgefahr des Materials durch Fremdnukleinsäuren bewerkstelligt.

In der Anwendung kann Gewebe aus dem Operationssitus entnommen, mit Skalpel oder Schere zerkleinert und direkt in die bevorzugt steril verpackte Vorrichtung 134 (selbstverständlich ist es möglich, sämtliche Teile des Analysekits ebenso steril zu verpacken) einzubringen, wobei in diesem ein Isolierungspuffer vorgelegt sein kann. Diese Vorrichtung 134 wird bevorzugt individuell einmal verwendet und muß nur einmal geöffnet und verschlossen werden, womit die Kontaminierung mit anderem Gewebe so gut wie ausgeschlossen wird.

Die Vorrichtungen können sowohl für den manuellen Einsatz als auch für den automatischen bzw. teilautomatischen Einsatz, z.B. in Labors, zumindest teilweise verwendet werden.

Der Ordnung halber sei abschließend darauf hingewiesen, daß zum besseren Verständnis des Aufbaus der Vorrichtungen diese bzw. deren Bestandteile bzw. des Behälters dieser bzw. dessen Bestandteile teilweise unmaßstäblich und/oder vergrößert und/oder verkleinert dargestellt wurden.

### Bezugszeichenaufstellung

- 1: Behälter
- 2: Schraubkappe
- 3: Urprobe
- 4: Doppelpfeil
- 5: Vorrichtung

- 6: Behälter
- 7: Penetrationsmittel
- 8: Doppelpfeil
- 9: Reagens
- 10: Pfeil

- 11: Pfeil
- 12: Bereich
- 13: Septum
- 14: Aufreinigungsvorrichtung
- 15: Matrix

- 16: Endbereich
- 17: Behälter
- 18: Bodenbereich
- 19: Kreispfeil
- 20: Eluierungsmittel

- 21: Behälter
- 22: Analysekit
- 23: Innenraum
- 24: Innenraum
- 25: Anschlußbereich

- 26: Anschlußbereich
- 27: Mittelbereich
- 28: Septum
- 29: Zylinder
- 30: Zylinder

- 31: Zylindermantel
- 32: Zylindermantel
- 33: Manteloberfläche
- 34: Rasteinrichtung
- 35: Ausnehmung

- 36: Steg
- 37: Ringsteg
- 38: Strömungskanal
- 39: Halteeinrichtung
- 40: Ausnehmung

- 41: Längsmittelachse
- 42: Verjüngung
- 43: Hohlraum
- 44: Steg
- 45: Endfläche

- 46: Schutzkappe
- 47: Strömungskanalendbereich
- 48: Halteelement
- 49: Trennelement
- 50: Trennelementendbereich

- 51: Übergangsbereich
- 52: Nut
- 53: Endbereich
- 54: Druckausgleichskanal
- 55: Flüssigkeitsspiegel

- 56: Verschlußstopfen
- 57: Stopfenoberfläche
- 58: Ringnut
- 59: Gummielement
- 60: Spannelement

- 61: Strömungskanalteil
- 62: Strömungskanalteil
- 63: Federelement
- 64: Arretiereinrichtung
- 65: Führungselement

- 66: Verschlußelement
- 67: Haltemittel
- 68: Umfang
- 69: Vorsprung
- 70: Verschlußelement

- 71: Vertiefung
- 72: Durchgangsöffnung
- 73: Verschlußkappe
- 74: Auffangbehälter
- 75: Septum

- 76: Restflüssigkeit
- 77: Vorsprung
- 78: Ausnehmung
- 79: Bodenbereich
- 80: Behälteröffnung

- 81: Spritze
- 82: Haltevorrichtung
- 83: Behälter
- 84: Innenraum
- 85: Kolben

- 86: Dichtelement
- 87: Septum
- 88: Steg
- 89: Ringspalt
- 90: Waschflüssigkeitsbehälter

- 91: Zentrifugationsgefäß
- 92: Steg
- 93: Waschflüssigkeit
- 94: Verschlußkappe
- 95: Doppelpfeil

- 96: Membran
- 97: Versorgungsleitung
- 98: Behälter
- 99: Innenraum
- 100: Trennweg

- 101: Kolbenstange
- 102: Behälteröffnung
- 103: Kanal
- 104: Handhabe
- 105: Kammer

- 106: Kammer
- 107: Halteelement
- 108: Verbindungskanal
- 109: Pfeil
- 110: Septum

- 111: Behälteröffnung
- 112: Teilströmungskanal
- 113: Rückhalteeinrichtung
- 114: Zentrifugationsgefäß
- 115: Behälterverschluß

- 116: Steg
- 117: Steg
- 118: Schraubkappe
- 119: Behälter
- 120: Behälterboden

- 121: Behältermantel
- 122: Innenraum
- 123: Einlaßöffnung
- 124: Behältermittelachse
- 125: Vorrichtung

- 126: Haltemittel
- 127: Vorrichtungsmantel
- 128: Strömungskanal
- 129: Schutzkappe
- 130: Penetrationsmittel

- 131: Halteelement
- 132: Anschlußbereich
- 133: Verschlußeinrichtung
- 134: Vorrichtung
- 135: Probe

- 136: Behälter
- 137: Innenraum
- 138: Behältermantel
- 139: Behälteröffnung
- 140: Behälterverschluß

- 141: Gewinde
- 142: Zerkleinerungseinrichtung
- 143: Manteloberfläche
- 144: Behälterboden
- 145: Flüssigkeit

- 146: Septum
- 147: Behälterverschlußöffnung
- 148: Antriebswelle
- 149: Messerwerk
- 150: Antriebseinrichtung

- 151: Messer
- 152: Penetrationsmittel
- 153: Dichtelement
- 154: Strömungskanal

## Patentansprüche

1. Verfahren zur Vorbereitung einer Urprobe biologischen Ursprungs für die Bestimmung zumindest einer darin enthaltenen Komponente, wie z.B. einer Nucleinsäure oder eines Proteins, bei dem die Urprobe in einem ersten Behälter enthalten ist und zumindest ein Teil dieser Urprobe aus dem ersten Behälter in zumindest einen Reaktionsbehälter durch ein Mittel zur Penetration transferiert wird, wobei in zumindest einem der Reaktionsbehälter ein Reagens bzw. Reagenzgemisch zur Aufarbeitung der Urprobe bzw. der zu bestimmenden Komponente vorgelegt ist, **dadurch gekennzeichnet, daß** für den Transfer des zumindest einen Teils der Urprobe zumindest solange jeweils zwei Behälter zu einem geschlossenen, luftdichten System miteinander verbunden werden, bis die zu bestimmende Komponente(n) durch Reaktion mit einem Reagens bzw. Reagenzgemisch bei Raumtemperatur stabilisiert vorliegt und bei nachfolgender Trennung der Behälter das Mittel zur Penetration am ersten Behälter verbleibt.

2. Verfahren nach Anspruch 1, **dadurch gekennzeichnet, daß** das Reagens bzw. Reagenzgemisch ausgewählt wird aus einer Gruppe umfassend einen Lysepuffer für Zellen, wie z.B. Blutzellen, einen Stabilisierungspuffer für Nucleinsäuren bzw. Proteine, einen Freisetzungspuffer, einen Konservierungspuffer bzw. die festen Salze dieser Puffer.

3. Verfahren nach Anspruch 1 oder 2, **dadurch gekennzeichnet, daß** zur Abtrennung der zu bestimmenden Komponente(n) eine Aufreinigungsvorrichtung mit einer darin gehalterten Matrix, wie z.B. eine Aufreinigungssäule, an einen Reaktionsbehälter angeschlossen wird und dieser zusammen mit der Aufreinigungsvorrichtung in einen weiteren Behälter verbracht wird oder der weitere Behälter mit der Aufreinigungsvorrichtung verbunden wird und das Reaktionsgemisch durch Einwirkung einer Kraft durch die Matrix in den weiteren Behälter verbracht wird, wobei die zu bestimmende(n) Komponente(n) von der Matrix zurückgehalten wird (werden).

4. Verfahren nach Anspruch 3, **dadurch gekennzeichnet, daß** nach der Abtrennung der zu bestimmenden Komponente(n) aus dem Reaktionsgemisch anstelle des Reaktionsbehälters ein, eine Waschflüssigkeit für die Komponente(n) enthaltender Waschbehälter an die Aufreinigungsvorrichtung angeschlossen und die Waschflüssigkeit durch Einwirkung einer Kraft durch die Matrix in den weiteren Behälter verbracht wird.

5. Verfahren nach Anspruch 3 oder 4, **dadurch gekennzeichnet, daß** die zu bestimmende Komponente(n) von der Matrix mit Hilfe eines Elutionsmittels aus einem an Stelle des Reaktionsbehälters bzw. des Waschflüssigkeitsbehälters angeschlossenen Elutionsbehälter in einen weiteren Behälter eluiert wird.

6. Verfahren nach einem der vorhergehenden Ansprüche 3 bis 5, **dadurch gekennzeichnet, daß** als einwirkende Kraft eine durch Unter- oder Überdruck erzeugte Kraft und/oder die Zentrifugalkraft verwendet wird.

## Claims

1. Method of preparing a sample of biological origin for determining at least one constituent contained in it, such as a nucleic acid or a protein, whereby the original sample is contained in a first container and at least a part of this original sample is transferred from the first container into at least one reaction container by a means which permits penetration, and a reagent or a reagent mixture for processing the original sample and constituent to be determined is placed in at least one of the reaction containers beforehand, **characterised in that**, in order to transfer the at least one part of the original sample, two containers are connected to one another to form a closed, air-tight system until the constituent(s) to be determined has or have been stabilised due to a reaction with a reagent or reagent mixture at room temperature, and when the containers are subsequently separated, the penetration means remains on the first container.

2. Method as claimed in claim 1, **characterised in that** the reagent or reagent mixture is selected from a group comprising a lysis buffer for cells, such as blood cells, a stabiliser buffer for nucleic acids and proteins, a releasing buffer, a preserving buffer and the solid salts of these buffers.

3. Method as claimed in claim 1 or 2, **characterised in that**, in order to separate the constituent(s) to be determined, a cleaning device containing a matrix, for example a cleaning column, is connected to a reaction container and the latter is placed together with the cleaning device in another container or the other container is connected to the cleaning device, and the reaction mixture is driven through the matrix into the other container due to the effect of a force, and the constituent(s) to be determined is or are retained by the matrix.

4. Method as claimed in claim 3, **characterised in that**, after separating the constituent(s) to be determined from the reaction mixture, a washing container containing a washing fluid for the constituent(s) is connected to the cleaning device in the place of the reaction container and the washing fluid is driven through the matrix into the other container due to the effect of a force.

5. Method as claimed in claim 3 or 4, **characterised in that** the constituent(s) to be determined is or are eluted out of the matrix with the aid of an eluting agent contained in an elution container connected in the place of the reaction container respectively washing fluid container.

6. Method as claimed in one of preceding claims 3 to 5, **characterised in that** the force used is generated by a negative pressure or over-pressure and/or centrifugal force is used.

## Revendications

1. Procédé de préparation d'un prélèvement d'origine biologique pour déterminer au moins l'un des constituants, tels que, par exemple, un acide nucléique ou une protéine, procédé lors duquel le prélèvement se trouve dans un premier récipient et au moins une partie de ce prélèvement est transférée du premier récipient à au moins un récipient de réaction à l'aide d'un moyen de pénétration. Dans au moins l'un des récipients de réaction, on a placé au préalable un réactif ou un mélange réactif pour préparer le prélèvement ou les constituants à déterminer. Le procédé se caractérise en ceci que, pour le transfert de la ou des parties du prélèvement, on réunit deux récipients pour en faire un système fermé, étanche à l'air, au moins jusqu'à ce que le ou les constituants à déterminer se soient stabilisés du fait de la réaction avec un réactif ou un mélange réactif à température ambiante et qu'il ne reste que le moyen de pénétration dans le premier récipient suite à la séparation subséquente des récipients.

2. Procédé selon la revendication 1, **caractérisé en ce que** le réactif ou le mélange réactif est choisi dans un groupe comportant un tampon de lyse pour cellules, telles que des cellules sanguines, par exemple, un tampon de stabilisation pour les acides nucléiques ou les protéines, un tampon de libération, un tampon de conservation ou les sels solides de ces tampons.

3. Procédé selon la revendication 1 ou 2, **caractérisé en ce que**, pour séparer le(s) constituant(s) à déterminer, on raccorde un système d'épuration comportant une matrice fixée à l'intérieur, telle qu'une colonne d'épuration, par exemple, à un récipient de réaction et on transpose ce dernier dans un autre récipient conjointement au système d'épuration ou bien on réunit le second récipient au système d'épuration et on transpose le mélange de réaction dans le second récipient grâce à l'action d'une force exercée par la matrice, le(s) constituant(s) à déterminer étant retenu(s) par la matrice.

4. Procédé selon la revendication 3, **caractérisé en ce que**, après le retrait du/des constituant(s) à déterminer hors du mélange de réaction, à la place du récipient de réaction, on raccorde un récipient de lavage contenant le liquide de lavage destiné au(x) constituant(s) à un système d'épuration et on transpose le liquide de lavage dans l'autre récipient grâce à l'action d'une force exercée par la matrice.

5. Procédé selon la revendication 3 ou 4, **caractérisé en ce que** le(s) constituant(s) à déterminer est/sont élué(s) par la matrice, à l'aide d'un agent d'élution, d'un récipient d'élution raccordé à la place du récipient de réaction ou du récipient de liquide de lavage à un autre récipient.

6. Procédé selon l'une quelconque des revendications précédentes 3 à 5, **caractérisé en ce qu'**on utilise, comme force d'action, une force produite par une dépression ou une surpression et/ou la force centrifuge.
